# EUROPEAN PATENT SPECIFICATION

(11) **EP 2 343 338 B1**
(45) Date of publication and mention of the grant of the patent: **11.07.2018**
(21) Application number: 09823662.3
(22) Date of filing: 29.10.2009
(51) Int. Cl.: C08K 3/34, C08K 7/00, C08L 9/04

(54) **NITRILE COPOLYMER LATEX COMPOSITION AND NITRILE COPOLYMER RUBBER COMPOSITION**
NITRIL-COPOLYMER-LATEX-ZUSAMMENSETZUNG UND NITRIL-COPOLYMER-KAUTSCHUK-ZUSAMMENSETZUNG
COMPOSITION DE LATEX DE COPOLYMÈRE DE NITRILE ET COMPOSITION DE CAOUTCHOUC DE COPOLYMÈRE DE NITRILE

(30) Priority: 29.10.2008 JP 2008278158
(43) Date of publication of application: 13.07.2011
(73) Proprietor: Zeon Corporation, Tokyo 100-8246 (JP)
(72) Inventor: TSUKADA, Akira, Tokyo 100-8246 (JP); KATANO, Chikara, Tokyo 100-8246 (JP); EJIRI, Kazuhiro, Tokyo 100-8246 (JP); NAKAMURA, Tadashi, Tokyo 100-8246 (JP)
(74) Representative: Adam, Holger
(86) International application number: PCT/JP2009/068582
(87) International publication number: WO 2010/050552

(56) References cited:
- EP-A1- 2 463 335
- WO-A1-2008/123405
- WO-A1-2009/096456
- JP-A- 62 256 835
- JP-A- 2001 172 433
- JP-A- 2004 051 747
- JP-A- 2006 022 220
- JP-A- 2006 070 137
- JP-A- 2007 277 341
- JP-A- 2008 222 891
- JP-A- 2008 255 158

## Description

### TECHNICAL FIELD

The present invention relates to a rubber composition which gives a nitrile copolymer rubber cross-linked product which has a small gasoline permeability and is excellent in sour gasoline resistance and cold resistance and to a latex composition which gives the rubber composition.

### BACKGROUND ART

In the past, rubber which contains α,β-ethylenically unsaturated nitrile monomer units and conjugated diene monomer units or olefin monomer units (nitrile copolymer rubber) has been known as rubber which is excellent in oil resistance. Cross-linked products of the same have been used mainly as materials for fuel hoses, gaskets, packings, oil seals, and other various types of rubber products used around oil for mainly automotive applications.

In recent years, the global environment protection movement has been gaining strength. Due to this, efforts are underway to reduce the amount of evaporation of gasoline and other fuel into the atmosphere. In Japan as well, much lower gasoline permeability is being sought in fuel hoses, seals, packings, and other applications. Further, fuel hoses are being required to offer resistance to free radicals generated in sour gasoline (sour gasoline resistance).

In view of this situation, Patent Document 1 proposes a nitrile copolymer rubber which has a superhigh nitrile content of 55 to 80 wt% at a glass transition temperature of -15 to 30°C of a nitrile content ("superhigh nitrile content" meaning an extremely high nitrile content of a nitrile content of 55 to 80 wt%). However, the rubber of this Patent Document 1 suffered from susceptibility to bleeding of the plasticizer and was inferior in cold resistance.

### PRIOR ART DOCUMENTS

### PATENT DOCUMENTS

Patent Document 1: EP1205499A2 (Japanese Patent Publication (A) No. 2002-206011)

### DISCLOSURE OF THE INVENTION

### PROBLEM TO BE SOLVED BY THE INVENTION

The present invention was made in view of this actual situation and has as its object to provide a rubber composition which gives a nitrile copolymer rubber cross-linked product which has a small gasoline permeability and is excellent in sour gasoline resistance and cold resistance and a latex composition which gives that rubber composition.

### MEANS FOR SOLVING THE PROBLEMS

The inventors discovered that it is possible to achieve the above object by a nitrile copolymer latex composition which is obtained by adding to a latex of a nitrile copolymer rubber which has a predetermined amount of α,β-ethylenically unsaturated nitrile monomer units a plate-shaped filler which has a swelling capacity with respect to water and has a thixotropic index (TI value), in the case made into a slurry using an aqueous medium, in a predetermined ranges and thereby completed the present invention.

That is, according to the present invention, there is provided a nitrile copolymer latex composition containing a latex of a nitrile copolymer rubber (A) having α,β-ethylenically unsaturated nitrile monomer units in 20 to 70 wt%, and a plate-shaped filler (B), wherein said plate-shaped filler (B) has a swelling capacity with respect to water of 27 to 55 (ml/2g), a thixotropic index (TI value) when mixed with an aqueous medium in a 5 wt% concentration to obtain a slurry is 2.3 to 6, and an aspect ratio of 260 to 2,000, and a ratio of said plate-shaped filler (B) to the nitrile copolymer rubber (A), as 100 parts by weight, is 1 to 200 parts by weight.

Preferably, the nitrile copolymer rubber (A) further has cationic monomer units and/or monomer units able to form cations, and the ratio of content of the cationic monomer units and/or monomer units able to form cations in the nitrile copolymer rubber (A) is 0.1 to 20 wt%.

Preferably, the nitrile copolymer rubber (A) further has conjugated diene monomer units, and a ratio of content of the conjugated diene monomer units in the nitrile copolymer rubber (A) is 10 to 79.9 wt%.

Preferably, the plate-shaped filler (B) is a smectites.

Preferably, the nitrile copolymer latex composition further contains a plasticizer (C).

Preferably, the nitrile copolymer rubber (A) is a hydrogenated nitrile copolymer rubber where at least part of the carbon-carbon unsaturated bond parts is hydrogenated.

Preferably, the nitrile copolymer latex composition further contains, with respect to the nitrile copolymer rubber (A) as 100 parts by weight, 10 to 150 parts by weight of a vinyl chloride resin and/or acryl resin.

According to the present invention, there is provided a nitrile copolymer rubber composition which is obtained by coagulating any of the above nitrile copolymer latex compositions.

Preferably, the nitrile copolymer rubber composition further contains, with respect to the nitrile copolymer rubber (A) in the nitrile copolymer rubber composition as 100 parts by weight, 10 to 150 parts by weight of a vinyl chloride resin and/or acryl resin.

Preferably, the nitrile copolymer rubber composition further contains a particle-shaped filler (D) with an aspect ratio of 1 to less than 30, and a ratio of contents of the plate-shaped filler (B) and the particle-shaped filler (D) is, by weight ratio, "the plate-shaped filler (B)/the particle-shaped filler (D)"=0.01 to 30.

According to the present invention, there is provided a cross-linkable nitrile copolymer rubber composition which is comprised of any of the above nitrile copolymer rubber compositions to which a cross-linking agent is added.

According to the present invention, there is provided a rubber cross-linked product obtained by cross-linking the cross-linkable nitrile copolymer rubber composition.

Preferably, the rubber cross-linked product is a hose.

### EFFECTS OF THE INVENTION

According to the present invention, there is provided a rubber composition which gives a nitrile copolymer rubber cross-linked product which is small in gasoline permeability and which is excellent in sour gasoline resistance and cold resistance and a latex composition which gives the rubber composition.

### DESCRIPTION OF EMBODIMENTS

The nitrile copolymer latex composition of the present invention is a composition which contains a latex of a nitrile copolymer rubber (A) which has α,β-ethylenically unsaturated nitrile monomer units in 20 to 70 wt% and a plate-shaped filler (B) which has a swelling capacity with respect to water of 27 to 55 (ml/2g) and which has a thixotropic index (TI value) when mixed with an aqueous medium in a 5 wt% concentration to obtain a slurry of 2.3 to 6 and an aspect ratio of 260 to 2,000, and which has a ratio of the plate-shaped filler (B) to the nitrile copolymer rubber (A), as 100 parts by weight, of 1 to 200 parts by weight.

### Nitrile Copolymer Rubber (A)

First, the nitrile copolymer rubber (A) which forms the latex of the nitrile copolymer rubber (A) which is used in the present invention will be explained.

The nitrile copolymer rubber (A) is a rubber which has at least α,β-ethylenically unsaturated nitrile monomer units in 20 to 70 wt%.

The ratio of content of the α,β-ethylenically unsaturated nitrile monomer units is, with respect to all monomer units, 20 to 70 wt%, preferably 25 to 65 wt%, more preferably 30 to 60 wt%. If the ratio of content of the α,β-ethylenically unsaturated nitrile monomer units is too low, the obtained rubber cross-linked product deteriorates in oil resistance and the gasoline permeability becomes larger. On the other hand, if the ratio of content is too high, the obtained rubber cross-linked product becomes inferior in cold resistance and the embrittlement temperature becomes higher.

The α,β-ethylenically unsaturated nitrile monomer forming the α,β-ethylenically unsaturated nitrile monomer units is not particularly limited so long as being an α,β-ethylenically unsaturated compound which has nitrile groups, but, for example, acrylonitrile; α-chloroacrylonitrile, α-bromoacrylonitrile, or other α-halogenoacrylonitriles; methacrylonitrile or other α-alkylacrylonitriles; etc. may be mentioned. Among these, acrylonitrile and methacrylonitrile are preferable. These may be used as single types alone or as several types together.

Further, the nitrile copolymer rubber (A) which is used in the present invention preferably further has, in addition to the α,β-ethylenically unsaturated nitrile monomer units, cationic monomer units and/or monomer units able to form cations.

The ratio of content of the cationic monomer units and/or monomer units able to form cations is, with respect to the total monomer units, preferably 0.1 to 20 wt%, more preferably 0.3 to 15 wt%, furthermore preferably 0.5 to 10 wt%. If the ratio of content of the cationic monomer units and/or monomer units able to form cations is too low, the obtained rubber cross-linked product will tend to become larger in gasoline permeability. On the other hand, if the ratio of content is too high, the obtained rubber cross-linked product will tend to deteriorate in cold resistance.

The monomer which forms the cationic monomer units and/or monomer units able to form cations is not particularly limited so long as a monomer which forms monomer units which becomes charged plus when the obtained polymer contacts water or an acid aqueous solution. As such a monomer, for example, as a cationic monomer, a monomer which contains a quaternary ammonium base is preferable. Further, as a monomer able to form cations, a monomer which has a precursor part (substituent) such as a tertiary amine group which is cationated to an ammonium salt (for example, amine hydrochloride or amine sulfate) when contacting hydrochloric acid, sulfuric acid or another acid aqueous solution is preferable.

As specific examples of cationic monomers, a (meth)acryloyloxytrimethyl ammonium chloride (meaning acryloyloxytrimethyl ammonium chloride and/or methacryloyloxytrimethyl ammonium chloride, same below), (meth)acryloyloxyhydroxypropyltrimethyl ammonium chloride, (meth)acryloyloxytriethyl ammonium chloride, (meth)acryloyloxydimethylbenzyl ammonium chloride, (meth)acryloyloxytrimethyl ammonium methylsulfate, or other (meth)acrylate ester monomer which contains a quaternary ammonium base; (meth)acrylamidopropyltrimethyl ammonium chloride, (meth)acrylamidopropyldimethylbenzyl ammonium chloride, or other (meth)acrylamide monomer which contains a quaternary ammonium base; etc. may be mentioned.

As specific examples of monomer able to form cations, 2-vinylpyridine, 4-vinylpyridine, or other cyclic amine monomer which contains a vinyl group; dimethylaminoethyl (meth)acrylate or other (meth)acrylate ester monomer which contains a tertiary amino group; (meth)acrylamide dimethylaminoethyl, N,N-dimethylaminopropyl acrylamide, or other (meth) acrylamide monomer which contains a tertiary amino group; N-(4-anilinophenyl)acrylamide, N-(4-anilinophenyl)methacrylamide, N-(4-anilinophenyl)cinnamide, N-(4-anilinophenyl) crotonamide, N-phenyl-4-(3-vinylbenzyloxy)aniline , N-phenyl-4-(4-vinylbenzyloxy)aniline etc. may be mentioned.

Among the cationic monomers and monomers able to form cations, since the effect of the present invention becomes much more remarkable, a cyclic amine monomer which contains a vinyl group, a (meth)acrylic ester monomer which contains a tertiary amino group, and a (meth)acrylamide monomer which contains a tertiary amino group are preferable, a cyclic amine monomer which contains a vinyl group and an acrylamide monomer which contains a tertiary amino group are more preferable, and a cyclic amine monomer which contains a vinyl group is particularly preferable. These may be used as single types alone or as several types together.

Further, the nitrile copolymer rubber (A) which is used in the present invention preferably also contains conjugated diene monomer units so as to make the obtained rubber cross-linked product have rubbery elasticity.

As the conjugated diene monomer which forms the conjugated diene monomer units, a C4 or higher conjugated diene is preferable. For example, 1,3-butadiene, isoprene, 2,3-dimethyl-1,3-butadiene, 1,3-pentadiene, etc. may be mentioned. Among these, 1,3-butadiene is preferable. These may be used as single types alone or as several types together.

The ratio of content of the conjugated diene monomer units in the nitrile copolymer rubber (A) is, with respect to the total monomer units, preferably 10 to 79.9 wt%, more preferably 20 to 74.7 wt%, furthermore preferably 30 to 69.5 wt%. If the ratio of content of the conjugated diene monomer units is too low, the obtained rubber cross-linked product is liable to fall in rubbery elasticity. On the other hand, if too great, the obtained rubber cross-linked product may be impaired in heat aging resistance or chemical stability.

Further, the nitrile copolymer rubber (A) which is used in the present invention may contain, in addition to the α,β-ethylenically unsaturated nitrile monomer units, cationic monomer units and/or monomer units able to form cations, and conjugated diene monomer units, units of other monomers able to copolymerize with these monomers which form these monomer units. The ratio of content of such other monomer units is, with respect to the total monomer units, preferably 30 wt% or less, more preferably 20 wt% or less, furthermore preferably 10 wt% or less.

As such other copolymerizable monomers, for example, styrene, α-methylstyrene, vinyl toluene, and other aromatic vinyl compounds; fluoroethyl vinyl ethers, fluoropropyl vinyl ethers, o-trifluoromethylstyrene, vinyl pentafluorobenzoate, difluoroethylene, tetrafluoroethylene, and other fluorine-containing vinyl compounds; 1,4-pentadiene, 1,4-hexadiene, vinyl norbornene, dicyclopentadiene, and other nonconjugated diene compounds; ethylene; propylene, 1-butene, 4-methyl-1-pentene, 1-hexene, 1-octene, and other α-olefin compounds; acrylic acid, methacrylic acid, maleic acid, anhydrous maleic acid, itaconic acid, anhydrous itaconic acid, fumaric acid, anhydrous fumaric acid, and other a,β-ethylenically unsaturated carboxylic acids and their anhydrides; methyl (meth)acrylate, ethyl (meth)acrylate, butyl (meth)acrylate, 2-ethylhexyl (meth)acrylate, and other α,β-ethylenically unsaturated carboxylic acid alkyl esters; monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, dibutyl itaconate, and other monoesters and diesters of α,β-ethylenically unsaturated polyvalent carboxylic acids; methoxyethyl (meth)acrylate, methoxypropyl (meth)acrylate, butoxyethyl (meth)acrylate, and other alkoxyalkyl esters of α,β-ethylenically unsaturated carboxylic acids; 2-hydroxyethyl (meth)acrylate, 3-hydroxypropyl (meth)acrylate, and other hydroxyalkyl esters of α,β-ethylenically unsaturated carboxylic acids; divinylbenzene and other divinyl compounds; ethylene di(meth)acrylate, diethyleneglycol di(meth)acrylate, ethyleneglycol di(meth)acrylate, and other di(meth)acrylic acid esters; trimethylolpropane tri(meth)acrylate, and other trimethacrylic acid esters; and other polyfunctional ethylenic unsaturated monomers and also N-methylol (meth)acrylamide, N,N'-dimethylol(meth)acrylamide, and other self cross-linkable compounds; etc. may be mentioned.

The nitrile copolymer rubber (A) has a Mooney viscosity (below, sometimes referred to as a "polymer Mooney viscosity") (ML₁₊₄, 100°C) of preferably 3 to 250, more preferably 10 to 230, furthermore preferably 20 to 200. If the nitrile copolymer rubber (A) is too low in polymer Mooney viscosity, the obtained rubber cross-linked product is liable to drop in strength characteristics. On the other hand, if too high, the workability when made a nitrile copolymer latex composition may deteriorate.

### Method of Production of Latex of Nitrile Copolymer Rubber (A)

The method of production of the latex of the nitrile copolymer rubber (A) is not particularly limited. It is enough that it is a method which enables copolymerization of the above monomers which form the nitrile copolymer rubber (A), but for example the emulsion polymerization method of using sodium dodecylbenzene sulfonate or another emulsifier to obtain a latex of a copolymer having an about 50 to 1,000 nm average particle size, the suspension polymerization method (including also microsuspension polymerization method) of using polyvinyl alcohol or another dispersant to obtain a latex of a copolymer having an about 0.2 to 200 µm average particle size, etc. may be suitably used. Among these, due to the ease of control of the polymerization reaction, the emulsion polymerization method is more preferable.

The emulsion polymerization method is preferably performed by the following procedure.

Note that, below, suitably, the α,β-ethylenically unsaturated nitrile monomer is referred to as the "monomer (m1)", the conjugated diene monomer is referred to as the "monomer (m2)", and the cationic monomer and/or monomer able to form cations is referred to as the "monomer (m3)".

That is, the method of polymerizing a monomer mixture of 100 parts by weight comprising the monomer (m1) in 10 to 75 parts by weight, preferably 15 to 70 parts by weight, more preferably 20 to 65 parts by weight, the monomer (m2) in 5 to 90 parts by weight, preferably 15 to 84.9 parts by weight, more preferably 25 to 79.9 parts by weight, and the monomer (m3) in 0 to 20 parts by weight, preferably 0.1 to 15 parts by weight, more preferably 0.1 to 10 parts by weight (where the monomer (m1), monomer (m2), and monomer (m3) total 100 parts by weight) by emulsion polymerization, stopping the polymerization reaction when the polymerization conversion rate is preferably 50 to 95 wt%, then if desired removing the unreacted monomers is preferable.

If the amount of use of the monomer (m1) which is used for the emulsion polymerization method is too small, the obtained rubber cross-linked product deteriorates in oil resistance and becomes greater in gasoline permeability, while if too large, tends to deteriorate in cold resistance. If the amount of use of the monomer (m2) is too small, the reaction loses activity in the initial stage of polymerization, while if too large, the obtained rubber cross-linked product tends to become greater in gasoline permeability. Further, if the amount of use of the monomer (m3) is too large, the rubber cross-linked product tends to deteriorate in cold resistance.

Further, if the polymerization conversion rate for stopping the polymerization reaction is too low, recovery of the unreacted monomers becomes extremely difficult. On the other hand, if too high, the obtained rubber cross-linked product tends to deteriorate in normal physical properties.

Note that, at the time of emulsion polymerization, it is possible to suitably use an emulsifier, polymerization initiator, polymerization secondary material, etc. conventionally known in the field of emulsion polymerization. The polymerization temperature and the polymerization time may also be suitably adjusted.

In the present invention, it is also possible to use the entire amount of the monomers (m1) to (m3) which are used for the emulsion polymerization so as to start the polymerization reaction, but from the viewpoint of controlling the distribution of composition of the monomer units of the copolymer produced and obtaining a rubber cross-linked product richer in rubbery elasticity, it is preferable to use part of the entire amount of the monomers (m1) to (m3) which are used for the emulsion polymerization to start the polymerization reaction, then add the remains of the monomers (m1) to (m3) which are used for the emulsion polymerization to the reactor for polymerization. This is because in general, if ending up using the entire amount of the monomers (m1) to (m3) which are used for the emulsion polymerization from the start of the polymerization reaction, the distribution of composition of the copolymer will become broader (ratio of monomer units will become more varied depending on the locations in the copolymer).

In this case, it is preferable to charge into the reactor a monomer mixture comprised of preferably 10 to 100 wt%, more preferably 20 to 100 wt%, particularly preferably 30 to 100 wt% of the monomer (m1) which is used for the polymerization, preferably 5 to 90 wt%, more preferably 10 to 80 wt%, particularly preferably 15 to 70 wt% of the monomer (m2) which is used for the polymerization, and preferably 0 to 100 wt%, more preferably 30 to 100 wt%, particularly preferably 70 to 100 wt% of the monomer (m3) which is used for the polymerization, start the polymerization reaction, then, when the polymerization conversion rate of the monomer mixture which is charged into the reactor is preferably 5 to 80 wt% in range, adding the remains of the monomers to the reactor to continue the polymerization reaction.

The method of adding the remaining monomers is not particularly limited. They may be added all together or may be added in batches. Further, they may be added continuously. In the present invention, from the viewpoint of the ability to more simply control the obtained copolymer in distribution of composition, the remaining monomers is preferably added in batches. Addition in one to six batches is particularly preferable. If adding the remaining monomers in batches, the amounts of monomers added in batches and the timings of addition of the batches may be adjusted in accordance with the progress in the polymerization reaction so as to obtain the desired copolymer.

Further, after this, if desired, heat distillation, vacuum distillation, steam distillation, or another known method is used to remove the unreacted monomers to obtain the latex of the nitrile copolymer rubber (A).

In the present invention, the latex of the nitrile copolymer rubber (A) which is obtained by the emulsion polymerization method has a solid content concentration of preferably 5 to 70 wt%, more preferably 10 to 60 wt%.

Note that, the nitrile copolymer rubber (A) which is used in the present invention may be a hydrogenated nitrile copolymer rubber which is comprised of the copolymer obtained by the above such copolymerization in which at least part of the unsaturated bond parts in the conjugated diene monomer unit parts is hydrogenated (hydrogenation reaction). The method of hydrogenation is not particularly limited. A known method may be employed. When making the nitrile copolymer rubber (A) a hydrogenated nitrile copolymer rubber, its iodine value is 120 or less, preferably 80 or less, more preferably 40 or less. By hydrogenating the nitrile copolymer rubber (A) to obtain hydrogenated nitrile copolymer rubber, it is possible to improve the heat resistance, weather resistance, ozone resistance, etc.

### Nitrile Copolymer Latex Composition

The nitrile copolymer latex composition of the present invention is comprised of the above-mentioned latex of the nitrile copolymer rubber (A) to which is added a plate-shaped filler (B) which has a swelling capacity with respect to water of 27 to 55 (ml/2g) and a thixotropic index (TI value), when mixed with an aqueous medium in a concentration of 5 wt% to obtain a slurry, of 2.3 to 6. Note that, as the aqueous medium, ion exchanged water is used.

The plate-shaped filler (B) has a swelling capacity with respect to water of 27 to 55 (ml/2g), preferably 27 to 53 (ml/2g), more preferably 27 to 51 (ml/2g). Further, the plate-shaped filler (B) has a TI value, when mixed with an aqueous medium in a concentration of 5 wt% to obtain a slurry, of 2.3 to 6, preferably 2.3 to 5. By using a plate-shaped filler (B) with a swelling capacity and a TI value in the avobe ranges and combining this with the avobe nitrile copolymer rubber (A) for use, the obtained cross-linked product can be made a product which is excellent in cold resistance while being good in gasoline permeability and sour gasoline resistance. If the plate-shaped filler (B) is too small in swelling capacity, the product tends to drop in gasoline permeability. On the other hand, if the swelling capacity and the TI value are too large, the product tends to drop in cold resistance.

Note that, the swelling capacity with respect to water of the plate-shaped filler (B) is measured by the following method.

That is, first, a measuring cylinder is filled with ion exchanged water 100 ml, next a sufficiently dried state plate-shaped filler (B) 2 g is charged divided into about 10 parts so as not to deposit on the inside walls of the measuring cylinder. Further, this is allowed to stand for 24 hours, then the volume (ml) of the deposit deposited at the bottom of the measuring cylinder (plate-shaped filler (B) swelled by water) is measured. This can be defined as the swelling capacity with respect to water of the plate-shaped filler (B) (units of ml/2g).

The plate-shaped filler (B) tends to change in swelling capacity with respect to water depending on the type and content of the cations which are contained in the plate-shaped filler (B), so, for example, the swelling capacity can be controlled by selecting the type and content of the cations. Specifically, by increasing the content of cations of Ca²⁺ ions, Mg²⁺ ions, or other bivalent cations or, even among monovalent cations, K⁺ ions, it is possible to reduce the swelling capacity with respect to water of the plate-shaped filler (B). Further, on the other hand, by reducing the content of bivalent cations or K⁺ ions and, instead, increasing the content of Na⁺ ions, Li⁺ ions, or other monovalent cations other than K⁺ ions, it is possible to raise the swelling capacity with respect to water of the plate-shaped filler (B).

Further, the TI value is measured by the following method.

That is, first, plate-shaped filler (B) is added to the ion exchanged water to give a 5 wt% concentration and strongly stirred, then this is allowed to stand for 24 hours at room temperature to prepare a slurry of the plate-shaped filler (B). Further, the value of the B-type viscosity measured at a rotor speed of 6 rpm and the value of the B-type viscosity measured at a rotor speed of 60 rpm of the prepared slurry are found and the ratio of the same (viscosity at 6 rpm/viscosity at 60 rpm) is found. Note that, the TI value is a general indicator showing the thixotropy of a slurry. For example, at a speed of 6 rpm (gentle stirring state), the slurry swelled by water is a soft jelly state, so the viscosity becomes high, while at a speed of 60 rpm (vigorous stirring state), the soft jelly state is destroyed, so the viscosity falls. Note that, the larger the TI value, the greater the thixotropy.

Here, plate-shaped filler (B) tends to become lower in TI value the smaller the plate-shaped filler (B) in aspect ratio and, tends to becom lower the smaller the plate-shaped filler (B) is agglomerating force. Further, the smaller the agglomerating force of the plate-shaped filler (B), the lower this tends to be become. For this reason, for example, by using the method of increasing the content of bivalent cations in the plate-shaped filler (B), the interlayer peeling of the plate-shaped filler (B) is suppressed, whereby the plate-shaped filler (B) is made smaller in aspect ratio and thereby the plate-shaped filler (B) can be lowered in TI value. Alternatively, the plate-shaped filler (B) may be treated for dispersion by the method of adding a dispersant etc. so as to lower the agglomerating force between particles of the plate-shaped filler (B) and lower the plate-shaped filler (B) in TI value.

On the other hand, the plate-shaped filler (B) tends to become higher in TI value the larger the plate-shaped filler (B) in aspect ratio and, further, tends to become higher the larger the plate-shaped filler (B) is agglomerating force. For this reason, for example, the method of reducing the content of bivalent cations in the plate-shaped filler (B) etc. can be used so as to facilitate interlayer peeling in the plate-shaped filler (B) and increase the aspect ratio of the plate-shaped filler (B) to thereby raise the plate-shaped filler (B) in TI value. Alternatively, for example, the method of adjusting the plate-shaped filler (B) in cation exchange capacity and other electrical properties, the method of adjusting the plate-shaped filler (B) in pH to be weakly acidic to neutral (for example, pH=5 to 7 or so), the method of treating the plate-shaped filler (B) by silane, etc. may be used to raise the plate-shaped filler (B) in agglomerating force and thereby raise the plate-shaped filler (B) in TI value.

The plate-shaped filler (B) is not particularly limited so long as being plate-shaped or flat shaped, but is one having an aspect ratio of 260 to 2,000, preferably 260 to 1,800, more preferably 260 to 1,600. By using as the plate-shaped filler (B) one with an aspect ratio in the above range, the obtained rubber cross-linked product can be improved in effect of blocking permeation of gasoline (gasoline permeation resistance). If the plate-shaped filler (B) is too small in aspect ratio, the obtained cross-linked product is liable to deteriorate in gasoline permeation resistance. On the other hand, if too large, dispersion in the nitrile copolymer rubber (A) becomes difficult and the obtained rubber cross-linked product is liable to end up falling in mechanical strength.

Note that, in the present invention, the "aspect ratio" of the plate-shaped filler (B) is the ratio of the planar average diameter and average thickness of the plate-shaped filler (B). Here, the planar average diameter and average thickness are number average values obtained by measuring the planar average diameter and thickness in the planar direction of 100 randomly selected particles of the plate-shaped filler (B) under an atomic force microscope and calculating the arithmetic average values of the same.

The plate-shaped filler (B) is not particularly limited, but a plate-shaped or flat-shaped inorganic filler may be mentioned. It may be one derived from a natural material, may be a natural material which is refined or otherwise treated, or may be a synthetic material. As specific examples, kaolinite, halloysite, and other kaolinites; montmorillonite, beidelite, nontronite, saponite, hectorite, stevensite, mica and other smectites; and vermiculites; chlorites; talc, etc. may be mentioned. Among these, smectites are preferable, while montmorillonite, mica, and saponite are particularly preferable. These may be used as single types alone or as several types together. Here, among the above, montmorillonite used as the plate-shaped filler (B) is contained as the main ingredient in bentonite. For this reason, as the montmorillonite, it is possible to use one obtained by refining bentonite. Alternatively, when using montmorillonite as the plate-shaped filler (B), it is possible to add this as bentonite into the nitrile copolymer latex composition of the present invention.

Further, in the present invention, when using montmorillonite, mica, or saponite as the plate-shaped filler (B), it is preferable to treat these by an aqueous dispersion, separate the layers forming the multilayer structured compounds of montmorillonite, mica, and saponite, and use what is obtained. By performing such aqueous dispersion treatment, it is possible to obtain a composition with a good dispersibility.

Note that, montmorillonite, mica, and saponite are multilayer structures having exchangeable cations between the layers, so when the above nitrile copolymer rubber (A) has cationic monomer units and/or monomer units able to form cations, it is more superior in dispersibility in the monomer units, so is preferably used. In particular, by raising the dispersibility of the nitrile copolymer rubber (A) and the plate-shaped filler (B), it is possible to reduce the gasoline permeability more and, further, lower the embrittlement temperature more. Note that, when the nitrile copolymer rubber (A) is made to include cationic monomer units and/or monomer units able to form cations, the ratio of the plate-shaped filler (B) and the cationic monomer units and/or monomer units able to form cations is preferably, by weight ratio, "plate-shaped filler (B) :cationic monomer units and/or monomer units able to form cations" = 1:0.0005 to 1:20, more preferably 1:0.003 to 1:5. If the ratio of these is outside the above range, the dispersibility of the nitrile copolymer rubber (A) and the plate-shaped filler (B) ends up falling and the above advantageous effect sometimes becomes harder to obtain.

Further, plate-shaped filler (B) has an average particle size of preferably 0.001 to 20 µm, more preferably 0.005 to 15 µm, particularly preferably 0.01 to 10 µm. In the present invention, the average particle size of the plate-shaped filler (B) is defined by the 50% volume cumulative diameter found by measuring the distribution of particle size by the X-ray transmission method. If the plate-shaped filler (B) is too small in particle size, the obtained rubber cross-linked product is liable to fall in elongation, while conversely if too large, a stable latex composition may not be able to be prepared.

The nitrile copolymer latex composition of the present invention has a ratio of content of the plate-shaped filler (B) of, with respect to the nitrile copolymer rubber (A) as 100 parts by weight, 1 to 200 parts by weight, preferably 2 to 120 parts by weight, more preferably 5 to 60 parts by weight. If the amount of use of the plate-shaped filler (B) is too small, the obtained rubber cross-linked product is liable to fall in gasoline permeation resistance or become insufficient in sour gasoline resistance. On the other hand, if the amount used is too large, the obtained rubber cross-linked product is liable to fall in elongation.

The nitrile copolymer latex composition of the present invention preferably contains, in addition to the nitrile copolymer rubber (A) and plate-shaped filler (B), a plasticizer (C). The plasticizer (C) used may be one used as a plasticizer (C) for rubber formulations in the past. It is not particularly limited, but a plasticizer (C) with an SP value (solubility parameter) by the HOY method of 8 to 10.2 (cal/cm³)^{1/2} is preferably used. If the plasticizer (C) is too large in SP value, the obtained rubber cross-linked product tends to be inferior in cold resistance. Further, if too small, the obtained rubber cross-linked product tends to deteriorate in gasoline permeation resistance.

As specific examples of such a plasticizer (C) (SP value in units of "(cal/cm³)^{1/2}"), for example, dibutoxyethyl adipate (SP value: 8.8), di(butoxyethoxyethyl) adipate (SP value: 9.2), and other ester compounds of adipic acid and ether bond-containing alcohols; dibutoxyethyl azelate, di(butoxyethoxyethyl) azelate, and other ester compounds of azelaic acid and ether bond-containing alcohols; dibutoxyethyl sebacate, di(butoxyethoxyethyl) sebacate, and other ester compounds of sebacic acid and ether bond-containing alcohols; dibutoxyethyl phthalate, di(butoxyethoxyethyl) phthalate, and other ester compounds of phthalic acid and ether bond-containing alcohols; dibutoxyethyl isophthalate, di(butoxyethoxyethyl) isophthalate, and other ester compounds of isophthalic acid and ether bond-containing alcohols; di-(2-ethylhexyl) adipate (SP value: 8.5), diisodecyl adipate (SP value: 8.3), diisononyl adipate, dibutyl adipate (SP value: 8.9), and other adipic acid dialkyl esters; di-(2-ethylhexyl) azelate (SP value: 8.5), diisooctyl azelate, di-n-hexyl azelate, and other azelaic acid dialkyl esters; di-n-butyl sebacate (SP value: 8.7), di-(2-ethylhexyl) sebacate (SP value: 8.4), and other sebacic acid dialkyl esters; dibutyl phthalate (SP value: 9.4), di-(2-ethylhexyl) phthalate (SP value: 9.0), di-n-octyl phthalate, diisobutyl phthalate, diheptyl phthalate (SP value: 9.0), diisodecyl phthalate (SP value: 8.5), diundecyl phthalate (SP value: 8.5), diisononyl phthalate (SP value: 8.9), and other phthalic acid dialkyl esters; dicyclohexyl phthalate and other phthalic acid dicycloalkyl esters; diphenyl phthalate, butylbenzyl phthalate (SP value: 10.2), and other phthalic acid aryl esters; di-(2-ethylhexyl) isophthalate, diisooctyl isophthalate, and other isophthalic acid dialkyl esters; di-(2-ethylhexyl) tetrahydrophthalate, di-n-octyl tetrahydrophthalate, diisodecyl tetrahydrophthalate, and other tetrahydrophthalic acid dialkyl esters; tri-(2-ethylhexyl) trimellitate (SP value: 8.9), tri-n-octyl trimellitate (SP value: 8.9), triisodecyl trimellitate (SP value: 8.4), triisooctyl trimellitate, tri-n-hexyl trimellitate, triisononyl trimellitate (SP value: 8.8), triisodecyl trimellitate (SP value: 8.8), and other trimellitic acid derivatives; epoxidized soybean oil (SP value: 9.0), epoxidized linseed oil (SP value: 9.3), and other epoxy-based plasticizers; tricresyl phosphate (SP value: 9.7) and other phosphoric acid ester-based plasticizers; etc. may be mentioned. These may be used as single types alone or as several types together.

Among these, since the obtained cross-linked product can be made excellent in embrittlement temperature and gasoline permeability, so ester compounds of adipic acid, azelaic acid, sebacic acid, phthalic acid, and other dibasic acids with ether bond-containing alcohols are preferable, ester compounds of adipic acid and ether bond-containing alcohols are more preferable, and di(butoxyethoxyethyl) adipate is particularly preferable.

The nitrile copolymer latex composition of the present invention has a content of the plasticizer (C) of, with respect to the nitrile copolymer rubber (A) as 100 parts by weight, preferably 0.1 to 200 parts by weight, more preferably 1 to 150 parts by weight, furthermore preferably 2 to 100 parts by weight. If the content of the plasticizer (C) is in the above range, bleeding can be prevented and, further, the effects of the present invention become much more remarkable.

Further, the nitrile copolymer latex composition of the present invention may further contain a particle-shaped filler (D) with an aspect ratio of 1 to less than 30. By making a particle-shaped filler (D) be further included, it is possible to make any nitrile copolymer rubber composition formed excellent in extrudability and make any rubber cross-linked product formed improved in crack growth resistance in the presence of a solvent. The particle-shaped filler (D) has an aspect ratio of preferably 1 to 20, more preferably 1 to 10, particularly preferably 1 to 5.

Note that, in the present invention, the aspect ratio of the particle-shaped filler (D) can be calculated by finding the ratio of the average long axis length of the particle-shaped filler (D) and the 50% volume cumulative diameter. Here, the average long axis length is the number average long axis length obtained by measuring the long axis lengths of 100 randomly selected filler particles under an optical micrograph and calculating their arithmetic average value.

The particle-shaped filler (D) with an aspect ratio of 1 to less than 30 is not particularly limited, but for example, calcium carbonate, calcium silicate, calcium sulfate, aluminum hydroxide, magnesium hydroxide, titanium oxide, zinc oxide, barium titanate, alumina, antimony oxide, red phosphorus, various types of metal powders, clay, various types of ferrite, hydrotalcite, etc. may be mentioned. These may be used as single types alone or as several types together. Among these, metal compounds which contain oxygen atoms are preferable, alkali earth metal compounds which contain oxygen atoms are more preferable, while calcium carbonate is particularly preferable. As the particle-shaped filler (D), it is possible to use one treated on its surface by at least one type of organic substance selected from the group of fatty acids, fatty acid salts, fatty acid esters, resin acids, resin acid salts, and resin acid esters. By using as the particle-shaped filler (D) one which is treated on its surface, it is possible to improve the dispersibility in the nitrile copolymer rubber composition.

The particle-shaped filler (D) has an average particle size of preferably 0.01 to 50 µm, more preferably 0.01 to 40 µm, furthermore preferably 0.01 to 25 µm. In the present invention, the average particle size of the particle-shaped filler (D) is defined by the 50% volume cumulative diameter found by measuring the distribution of particle size by the X-ray transmission method. If the particle-shaped filler (D) is too small in average particle size, the effect of improvement of the crack growth resistance in the presence of a solvent is sometimes not obtained. On the other hand, if the average particle size is too large, the effect of improvement of the extrudability is sometimes not obtained.

Further, the particle-shaped filler (D) has a specific surface area of preferably 1 to 100,000 m²/g, more preferably 1 to 6,000 m²/g, furthermore preferably 1 to 500 m²/g, particularly preferably 1 to 55 m²/g. If the particle-shaped filler (D) is too small in specific surface area, the obtained rubber cross-linked product tends to fall in elongation. On the other hand, if it is too large in specific surface area, the effect of improvement of the crack growth resistance in the presence of a solvent is sometimes not obtained.

Further, the ratio of contents of the plate-shaped filler (B) and the particle-shaped filler (D), when made the "plate-shaped filler (B)/particle-shaped filler (D)", by weight ratio, is preferably 0.01 to 30, more preferably 0.1 to 10, particularly preferably 0.5 to 5. If the ratio of content of the particle-shaped filler (D) to the plate-shaped filler (B) is too low ("plate-shaped filler (B)/particle-shaped filler (D)" is too large), the effects of improvement of the extrudability when made into a nitrile copolymer rubber composition and the crack growth resistance in the presence of a solvent when made into a rubber cross-linked product sometimes cannot be obtained. If the ratio of content of the particle-shaped filler (D) to the plate-shaped filler (B) is too high ("plate-shaped filler (B)/particle-shaped filler (D)" is too small), the obtained rubber cross-linked product falls in gasoline permeation resistance or the effect of improvement of the crack growth resistance in the presence of a solvent is sometimes not obtained.

Furthermore, the nitrile copolymer latex composition of the present invention may contain, in addition to the nitrile copolymer rubber (A), plate-shaped filler (B), plasticizer (C), and particle-shaped filler (D), a coupling agent. As the coupling agent, bis(3-(triethoxysilyl)propyl)disulfide or another silane coupling agent may be mentioned.

The method of addition of the coupling agent is not particularly limited, but for example the method of adding this to the plate-shaped filler (B) for mixing, then making the plate-shaped filler (B) an aqueous dispersion etc. may be mentioned.

The nitrile copolymer latex composition of the present invention has a content of the coupling agent of, with respect to the nitrile copolymer rubber (A) as 100 parts by weight, preferably 30 parts by weight or less, more preferably 20 parts by weight or less.

The nitrile copolymer latex composition of the present invention is preferably obtained by adding, while stirring, to a latex of the nitrile copolymer rubber (A), an aqueous dispersion of the plate-shaped filler (B) and an aqueous dispersion of the plasticizer (C) which is added in accordance with need. Due to this, a uniformly mixed and dispersed latex composition is obtained.

The method of preparing the aqueous dispersion of the plate-shaped filler (B) is not particularly limited, but it is sufficient to add the plate-shaped filler (B) to ion exchanged water or another aqueous medium while strongly stirring. In this case, it is sufficient to use an aqueous medium which contains, with respect to the plate-shaped filler (B), a 0.1 to 10 wt% amount of sodium polyacrylate, sodium tripolyphosphate, sodium hexametaphosphate, sodium pyrophosphate, sodium polymaleate, Na salt of β-naphthalene sulfonate-formalin condensate, or other dispersant or surfactant etc. These may be used as single types alone or as several types together. The solid content concentration of the aqueous dispersion of the plate-shaped filler (B) is preferably 1 to 50 wt%, more preferably 2 to 40 wt%.

Furthermore, in the present invention, when preparing an aqueous dispersion of the plate-shaped filler (B), it is also possible to use a wet-type crusher to make the plate-shaped filler (B) disperse in water. By using a wet type crusher for causing dispersion, when the plate-shaped filler (B) undergoes secondary agglomeration, it is possible to eliminate the secondary agglomeration of the plate-shaped filler (B) and possible to make the obtained cross-linked product more superior in gasoline permeability. As the wet type crusher used in this case, a Nanomizer (made by Yoshida Kikai Co., Ltd.), Superwing Mill DM-200 (made by Estec Co., Ltd.), Starburst (made by Sugino Machine), Starmill (made by Ashizawa Finetec), LPN Nanogenizer (made by Serendip AG), etc. may be mentioned, but it is also possible to use other wet-type crushers of course so long as similar effects are obtained.

Further, the method of preparing the aqueous dispersion of the plasticizer (C) when using a plasticizer (C) is not particularly limited, but it is preferable to prepare it by adding the plasticizer (C) while strongly stirring an aqueous medium which contains a surfactant in an amount of 0.5 to 10 wt% of the plasticizer (C). As such a surfactant, potassium rosinate, sodium laurylsulfate, potassium oleate, sodium dodecylbenzene sulfonate, or other anionic surfactant; polyoxyethylene alkyl ether, polyoxyethylene alkyl ester, polyoxyethylene sorbitan alkyl ester, or other nonionic surfactant; didecyl dimethyl ammonium chloride, stearyl trimethyl ammonium chloride, or other cationic surfactant etc. may be mentioned. Note that, the concentration of the plasticizer (C) in the aqueous dispersion is preferably made 5 to 70 wt%.

The nitrile copolymer latex composition of the present invention preferably further contains an acryl resin and/or vinyl chloride resin. By including an acryl resin and/or vinyl chloride resin, when made into a rubber cross-linked product, it is possible to obtain a product in which the ozone resistance is improved much more. The content of the acryl resin and/or vinyl chloride resin is, with respect to the nitrile copolymer rubber (A) as 100 parts by weight, preferably 10 to 150 parts by weight, more preferably 15 to 125 parts by weight, more preferably 20 to 100 parts by weight. If the content of the acryl resin and/or vinyl chloride resin is too small, the effect of addition becomes harder to obtain. On the other hand, if too large, the cold resistance is liable to deteriorate. Note that, the method of including the acryl resin and/or vinyl chloride resin is not particularly limited, but for example it is sufficient to mix an acryl resin and/or vinyl chloride resin in a latex state which is produced by emulsion polymerization with the nitrile copolymer latex composition (latex blending).

The vinyl chloride resin which is suitably used in the present invention is one in which the main constituent monomer forming the resin is vinyl chloride. The content of the monomer units of the vinyl chloride is preferably 50 to 100 wt%, more preferably 60 to 100 wt%, particularly preferably 70 to 100 wt%. Further, the acryl resin which is suitably used in the present invention is one in which the main constituent monomer forming the resin is a (meth)acrylate alkyl ester. The content of the monomer units of the (meth)acrylate alkyl ester is preferably 50 to 100 wt%, more preferably 60 to 100 wt%, particularly preferably 70 to 100 wt%. The number of carbon atoms of the alkyl groups is preferably 1 to 20, more preferably 1 to 18, particularly preferably 1 to 10.

The vinyl chloride resin and the acryl resin are not particularly limited in polymerization degree or molecular weight, but with the vinyl chloride resin, the average polymerization degree by the solution viscosity method defined in JIS K6721 is preferably 400 to 3,000, more preferably 600 to 2,000. With the acryl resin, the number average molecular weight in terms of standard polystyrene by gel permeation chromatography (GPC) using tetrahydrofuran as a solvent is preferably 10,000 to 7,000,000, more preferably 100,000 to 2,000,000.

### Nitrile Copolymer Rubber Composition and Cross-Linkable Nitrile Copolymer Rubber Composition

The nitrile copolymer rubber composition of the present invention can be obtained by coagulating the above nitrile copolymer latex composition and rinsing and drying it in accordance with need.

The coagulation of the nitrile copolymer latex composition is not particularly limited, but it is preferable to add the nitrile copolymer latex composition to an aqueous solution which contains a coagulant to cause salting out. As a coagulant, calcium chloride, sodium chloride, calcium hydroxide, aluminum sulfate, aluminum hydroxide, etc. may be mentioned. Further, the amount of use of the coagulant is, with respect to the nitrile copolymer rubber (A), preferably 0.5 to 150 wt%, particular preferably 0.5 to 20 wt%.

Here, when including cationic monomer units and/or monomer units able to form cations in the nitrile copolymer rubber (A), when salting out the nitrile copolymer latex composition, it is preferable to add a dilute sulfuric acid aqueous solution etc. to control the pH of the coagulant aqueous solution to the isoelectric point of the latex composition of the nitrile copolymer (A) or less. By controlling the pH of the coagulant aqueous solution, the functional groups of the cationic monomer units and monomer units able to form cations which are contained in the nitrile copolymer rubber (A) rise in zeta potential. Due to this, the dispersibility of the plate-shaped filler (B) is improved and, the obtained crumbs by coagulation can be made large in particle size.

In general, the particle size of the crumbs has a major effect on the degree of dehydration at the vibrating screen or squeezer after the coagulation and washing steps, the crumb recovery rate, and the degree of dryness in the drying step. For example, if the crumbs are too small in particle size, with a vibrating screen etc., the crumbs will be too small in particle size and will escape from the mesh of the screen or the polymer will be insufficiently caught up in the squeezer and the degree of dehydration will fall and the productivity will deteriorate. For this reason, the crumbs preferably have an average particle size of 0.5 to 40 mm.

Regarding the method of washing, dehydrating, and drying the crumbs, this may be made a method similar to the washing and dehydrating method and the drying method in production of general rubber. As the washing and dehydrating method, it is sufficient to use a net-mesh type filter, centrifugal separator, etc. to separate the crumbs obtained by coagulation and water, then wash the crumbs and dehydrate them by a squeezer etc. Next, it is possible to use a band dryer, ventilating standing dryer, twin-screw extruder, etc. which is generally used for production of rubber so as to dry the crumbs to a desired moisture content to thereby obtain the nitrile copolymer rubber composition of the present invention. Further, it is also possible to perform the coagulation and drying simultaneously inside a twin-screw extruder.

Note that, as the method of preparation of the nitrile copolymer rubber composition of the present invention, in addition to the method explained above, for example, it may be obtained by introducing into the latex of the nitrile copolymer rubber (A) the total amount or part of all of one or more of the plate-shaped filler (B), the plasticizer (C) added in accordance with need, the particle-shaped filler (D) added in accordance with need, the coupling agent added in accordance with need, and the acryl resin and/or vinyl chloride resin added in accordance with need, then coagulating and drying the result and kneading with the remaining ingredients by a roll, Bambury mixer, or other kneader. Further, it may also be obtained by coagulating and drying a latex composition of the nitrile copolymer rubber (A) and kneading into the obtained rubber composition the plate-shaped filler (B), plasticizer (C), particle-shaped filler (D), coupling agent, and acryl resin and/or vinyl chloride resin by a roll, Bambury mixer, or other kneader.

Further, when blending in the particle-shaped filler (D), it may be obtained by introducing into the latex of the nitrile copolymer rubber (A) the ingredients other than the particle-shaped filler (D) (plate-shaped filler (B), the plasticizer (C) added in accordance with need, the coupling agent added in accordance with need, and the acryl resin and/or vinyl chloride resin added in accordance with need), then coagulating and drying the result, then blending in the particle-shaped filler (D) and kneading with the remaining ingredients by a roll, Bambury mixer, or other kneader.

The thus obtained nitrile copolymer rubber composition has a Mooney viscosity of preferably 5 to 300, more preferably 10 to 250.

The cross-linkable nitrile copolymer rubber composition of the present invention is obtained by adding to the nitrile copolymer rubber composition obtained by the above method a cross-linking agent.

The cross-linking agent may be any one which is usually used as a cross-linking agent of a copolymer rubber containing nitrile groups and is not particularly limited. As typical cross-linking agents, a sulfur-based cross-linking agent or organic peroxide cross-linking agent which cross-link unsaturated bonds of the nitrile copolymer rubber (A) may be mentioned. These may be used as single types alone or as several types together. Among these, sulfur-based cross-linking agents are preferable.

As the sulfur-based cross-linking agents, powdered sulfur, flower of sulfur, precipitated sulfur, colloidal sulfur, surface-treated sulfur, insoluble sulfur, and other sulfurs; sulfur chloride, sulfur dichloride, morpholine disulfide, alkylphenol disulfide, dibenzothiazyl disulfide, N,N'-dithio-bis(hexahydro-2H-azenopine-2), phosphorus-containing polysulfide, high molecular weight polysulfide, and other sulfur-containing compounds; tetramethyl thiuram disulfide, selenium dimethyl dithiocarbamate, 2-(4'-morpholinodithio)benzothiazole or other sulfur-donor compounds; etc. may be mentioned. These may be used as single types alone or as several types together.

As organic peroxide cross-linking agents, dicumyl peroxide, cumen hydroperoxide, t-butylcumyl peroxide, p-menthane hydroperoxide, di-t-butylperoxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoylperoxide, t-butylperoxyisopropyl carbonate, t-butylperoxybenzoate, etc. may be mentioned. These may be used as single types alone or as several types together.

The content of cross-linking agent in the cross-linkable nitrile copolymer rubber composition of the present invention is not particularly limited, but is preferably, with respect to the nitrile copolymer rubber (A) as 100 parts by weight, 0.1 to 10 parts by weight, more preferably 0.2 to 5 parts by weight.

When using an organic peroxide cross-linking agent, it is possible to jointly use, as a cross-linking aid, trimethylol propane trimethacrylate, divinylbenzene, ethylene dimethacrylate, triallyl isocyanurate, and other polyfunctional monomers etc. The amount of use of these cross-linking aids is not particularly limited, but is preferably, with respect to the nitrile copolymer rubber (A) as 100 parts by weight, 0.5 to 20 parts by weight in range.

When using a sulfur-based cross-linking agent, it is possible to jointly use zinc white, stearic acid, or another cross-linking aid and a guanidine-based, aldehyde-amine-based, aldehyde-ammonia-based, thiazole-based, sulfenamide-based, thiourea-based, or other cross-linking accelerator. The amount of use of these cross-linking aid and cross-linking accelerator is not particularly limited, but is preferably, with respect to the nitrile copolymer rubber (A) as 100 parts by weight, 0.1 to 10 parts by weight in range.

Further, the nitrile copolymer rubber composition or cross-linkable nitrile copolymer rubber composition of the present invention may also, in accordance with need, contain other compounding agents which are used in general rubber, for example, cross-linking retardants, antiaging agents, fillers other than the plate-shaped filler (B) and particle-shaped filler (D), reinforcing agents, lubricants, adhesives, lubricants, processing aids, flame retardants, anti-mold agents, antistatic agents, coloring agents, and other additives.

As an antiaging agent, a phenol-based, amine-based, benzimidazole-based, phosphoric acid-based, or other antiaging agent may be used. As a phenol-based one, 2,2'-methylene bis(4-methyl-6-t-butylphenol) etc. may be mentioned, as an amine-based one, 4,4'-bis (α,α-dimethylbenzyl) diphenylamine, N-isopropyl-N'-phenyl-p-phenylene diamine, etc. may be mentioned, while as a benzimidazole-based one, 2-mercaptobenzimidazole etc. may be mentioned. These may be used alone as single types or as two or more types combined.

Further, the nitrile copolymer latex composition, nitrile copolymer rubber composition, and cross-linkable nitrile copolymer rubber composition of the present invention may contain, in a range not impairing the advantageous effects of the present invention, rubber other than the nitrile copolymer rubber (A). The rubber other than the nitrile copolymer rubber (A) is not particularly limited, but acryl rubber, ethylene-acrylate copolymer rubber, fluororubber, styrene-butadiene copolymer rubber, ethylene-propylene copolymer rubber, ethylene-propylene-diene ternary copolymer rubber, natural rubber and polyisoprene rubber, ethylene-vinyl acetate copolymer, etc. may be mentioned. Note that, the amount of inclusion when blending in a rubber other than the nitrile copolymer rubber (A) is preferably, with respect to the nitrile copolymer rubber (A) as 100 parts by weight, 100 parts by weight or less, more preferably 50 parts by weight or less, particularly preferably 30 parts by weight or less.

The cross-linkable nitrile copolymer rubber composition of the present invention has a Mooney viscosity (below, sometimes referred to as the "compound Mooney viscosity") (ML₁₊₄, 100°C) of preferably 5 to 250, more preferably 10 to 200.

### Rubber Cross-Linked Product

The rubber cross-linked product of the present invention is comprised of the above cross-linkable nitrile copolymer rubber composition cross-linked.

When cross-linking the cross-linkable nitrile copolymer rubber composition of the present invention, the composition is shaped by a shaping machine suitable for the shape of the product to be produced (rubber cross-linked product), for example, an extruder, injection molding machine, press, roll, etc., then a cross-linking reaction is caused to fix the cross-linked product in shape. When performing the cross-linking, the cross-linking may be performed after shaping or simultaneously with the shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Further, depending on its shape, size, etc., a rubber cross-linked product will sometimes not be sufficiently cross-linked up to the inside even if its surface is cross-linked, so it is possible to further heat the product for secondary cross-linking.

The thus obtained rubber cross-linked product of the present invention has a small gasoline permeability and excellent sour gasoline resistance and cold resistance. For this reason, it is preferably used as a hose comprised of one or more layers in which a layer (I) comprised of the rubber cross-linked product of the present invention is made at least one layer. The product is particularly preferably used as a fuel hose. Note that when a laminate of two or more layers, the layer (I) comprised of the rubber cross-linked product of the first embodiment may be used as any of an inside layer, intermediate layer, and outside layer. As the layer (II) forming the laminate other than the layer (I), the nitrile copolymer rubber (L) with a content of α,β-ethylenically unsaturated nitrile monomer units of preferably 5 to 55 wt%, more preferably 18 to 45 wt%, one containing the nitrile copolymer rubber (L) and an acryl-based resin and/or vinyl chloride-based resin, or a fluorine rubber, chloroprene rubber, hydrin rubber, chlorosulfonated polyethylene rubber, acryl rubber, ethylene-acrylic acid copolymer, ethylene-propylene copolymer, ethylene-propylene-diene ternary copolymer, butyl rubber, isoprene rubber, natural rubber, styrene-butadiene copolymer, fluorine resin, polyamide resin, polyvinyl alcohol, ethylene-vinyl acetate copolymer resin, ethylene-vinyl alcohol copolymer resin, polybutylene naphthalate, polyphenylene sulfide, polyolefin resin, polyester resin, etc. may be mentioned. These may be used as single types alone or as several types together.

Further, in accordance with need, to bond the layer (I) and the layer (II), it is possible to include in one or both of the layer (I) and the layer (II) a phosphonium salt, 1,8-diazabicyclo(5.4.0)undecene-7 salt (DBU salt), 1,5-diazabicyclo(4.3.0)-nonene-5 salt (DBN salt), etc. It is also possible to introduce between the layer (I) and the layer (II) a new layer (III) as a bonding layer. As the layer (III), it is possible to use a resin or rubber composition similar to the resin or rubber composition forming the above-mentioned layer (II). As the layer (III), it is possible to use one type alone or several types combined of the resin or rubber composition forming the above-mentioned layer (II) or include a phosnium salt, 1,8-diazabicyclo(5.4.0)undecene-7 salt (DBU salt), 1,5-diazabicyclo(4.3.0)-nonene-5 salt (DBN salt), etc.

Here, the layer (I) has a thickness of preferably 0.1 to 10 mm, more preferably 0.5 to 5 mm. Further, in the case of a two layer or more laminate, the layers other than the layer (I) have a thickness of preferably 0.1 to 10 mm, more preferably 0.5 to 5 mm. These single-layer hoses and multilayer hoses comprised of two or more layer laminates can, for example, be preferably used as fuel hoses.

Note that, the method of production of a hose including the rubber cross-linked product of the present invention having the above such constitution is not particularly limited, but the hose may be produced by injection molding, extrusion, etc. In the case of extrusion, an extruder etc. is used to form a tubular shape which is then cross-linked to obtain the hose of the present invention. The cross-linkable nitrile copolymer rubber composition of the present invention may be produced using a mandrel so it has the property of being resistant to mandrel cracks.

That is, when making the hose a single layer one comprised of only the cross-linked product of the present invention, first, the cross-linkable nitrile copolymer rubber composition of the present invention is formed into a tubular shape, a mandrel is inserted into the obtained tubular shaped article to fix it in shape, then the cross-linkable nitrile copolymer rubber composition is cross-linked.

Alternatively, when making the hose a multilayer one including the cross-linked product of the present invention, it is possible to laminate the cross-linkable nitrile copolymer rubber composition of the present invention and the resin or rubber composition for forming the layers other than the layer comprised of the cross-linked product of the present invention, shape them into a tubular shape, insert a mandrel into the obtained tubular shaped laminated article to fix it in shape, then cross-link the cross-linkable nitrile copolymer rubber composition.

Further, the rubber cross-linked product of the present invention is in addition suitable for packings, gaskets, O-rings, oil seals, and other seal members; oil hoses, fuel hoses, inlet hoses, gas hoses, brake hoses, refrigerant hoses, and other hoses. As the gas of the gas hoses, air, nitrogen, oxygen, hydrogen, carbon dioxide, carbon monoxide, methane, ethane, propane, dimethyl ether, LPG, etc. may be mentioned.

The nitrile copolymer latex composition of the present invention not only gives the nitrile copolymer rubber composition of the present invention, but is itself also useful as a latex composition for covering use. Note that, when used as a latex composition for covering use, it is sufficient to add a cross-linking agent similar to the cross-linking agent which is used for a cross-linkable nitrile copolymer rubber composition. As the method for covering an object with rubber using the nitrile copolymer latex composition of the present invention, the dip molding method of dipping a ceramic, glass, metal, or other mold into a latex composition, raising it up, and heating and immobilizing the layer adhering to the surface; the roll impregnation method of impregnating a fiber with the latex composition of the present invention, squeezing it by rolls etc., and heating and immobilizing it; the spray impregnation method of spraying a fiber with the latex composition of the present invention and heating and immobilizing it; the coating method of coating the surface of an object to be coated with the latex composition of the present invention and heating and immobilizing it; etc. may be mentioned.

When using the nitrile copolymer latex composition of the present invention for dipping, the solid content concentration is preferably 15 to 40 wt%, more preferably 25 to 35 wt%. By making the solid content concentration that range, it becomes easier to obtain a dipped product having a uniform coating thickness.

Further, when using the nitrile copolymer latex composition of the present invention for the roll impregnation method, the solid content concentration of the latex composition will differ depending on the type of the fiber and the target amount of deposition, but preferably is 5 to 30 wt%, more preferably 10 to 30 wt%. The permeation of a latex composition in fibers is affected by the surface tension of the latex composition, so the surface tension is preferably adjusted to 20 to 50 mN/m. As the method of adjusting the surface tension of the latex composition, the method of adding an anionic surfactant or nonionic surfactant may be mentioned.

Furthermore, when using the nitrile copolymer latex composition of the present invention for the coating method, for example, a coater is used to coat a paper or other base material, then a hot air dryer is used to dry this to thereby form a coated layer on the base material. As the coater, a blade coater, roll coater, curtain coater, rod coater, air knife coater, etc. may be mentioned. The solid content concentration of the latex composition is not particularly limited by the coater. While differing depending on the coater used, it is generally 10 to 60 wt%. As the drying conditions after coating, in general the drying is performed at 100 to 170°C or so for tens of seconds or so.

### EXAMPLES

Below, examples and comparative examples will be given to specifically explain the present invention. Below, unless specially indicated, "parts" are based on weight. Note that the tests and evaluations were based on the following.

### Mooney Viscosity

The Mooney viscosity (ML₁₊₄, 100°C) was measured based on JIS K6300.

### Normal Physical Properties (Tensile Strength, Elongation, 100% Tensile Stress, Hardness)

A cross-linkable nitrile copolymer rubber composition (cross-linkable hydrogenated nitrile copolymer rubber composition) was placed in a length 15 cm, width 15 cm, and depth 0.2 cm mold and press formed while applying pressure at 160°C for 20 minutes to obtain a plate-shaped rubber cross-linked product. The obtained plate-shaped rubber cross-linked product was punched into JIS No. 3 dumbbell shapes to prepare test pieces, and the test pieces were used in accordance with JIS K6251 to measure the tensile strength, elongation, and 100% tensile stress and further in accordance with JIS K6253 to measure the hardness of the rubber cross-linked product using a Durometer hardness tester type A.

### Gasoline Permeation Coefficient

Plate-shaped rubber cross-linked product similar to the one used for evaluation of the above normal physical properties was prepared, "a mixture of isoctane, toluene, and ethanol in a weight ratio of 2:2:1" as fuel oil was used, and the aluminum cup method was employed to measure the gasoline permeation coefficient. Specifically, a 100 ml capacity aluminum cup was filled with the above fuel oil to 50 ml, the plate-shaped rubber cross-linked product was placed over it to cap it, then fasteners were used to adjust the area by which the plate-shaped rubber cross-linked product separated the inside and outside of the aluminum cup to 25.50 cm², the aluminum cup was allowed to stand in a 23°C constant temperature tank, then the weight was measured every 24 hours to thereby measure the amount of permeation of the oil every 24 hours. The maximum amount was defined the amount of permeation (unit: g·mm/m²· day).

Note that, the lower the gasoline permeation coefficient, the better.

### Embrittlement Temperature

A sample similar to the plate-shaped rubber cross-linked product which was used for evaluation of the normal physical properties was used to measure the embrittlement temperature in accordance with JIS K6261.

### Extrudability

A cross-linkable nitrile copolymer rubber composition (including case of "cross-linkable hydrogenated nitrile copolymer rubber composition") was fed to a screw-type extruder set to a cylinder temperature of 60°C and a head temperature of 80°C and was run through a die determined in ASTM D2230, Method A. The obtained rubber cross-linked product was evaluated for smoothness of the surface skin to thereby evaluate the extrudability.

### Sour Gasoline Resistance Test

A sample similar to the plate-shaped rubber cross-linked product which was used for evaluation of the normal physical properties was prepared. The plate-shaped rubber cross-linked product was immersed in test oil, comprised of fuel oil constituted as "isooctane, toluene, and ethanol mixed in a weight ratio of 2:2:1" into which dilauroyl peroxide was dissolved in a 3 wt% concentration, under conditions of a temperature of 40°C for 500 hours (the test oil being changed with a new work twice per 168 hours). Further, after the elapse of 500 hours, the sample was subjected to a tensile test based on JIS K6253. The presence of any cracks at the time of stretching by the tensile test was checked for to evaluate the sour gasoline resistance.

### Production Example 1 (Production of Latex of Nitrile Copolymer Rubber (A1))

To a reaction vessel, water in 240 parts, acrylonitrile in 75.7 parts, and sodium dodecylbenzene sulfonate (emulsifier) in 2.5 parts were charged and the temperature adjusted to 5°C. Next, the gas phase was reduced in pressure and sufficiently removed, then 1,3-butadiene in 22 parts, a polymerization initiator of p-methane hydroperoxide in 0.06 part, sodium ethylene diamine tetraacetate in 0.02 part, ferrous sulfate (7-hydrate) in 0.006 part and sodium formaldehyde sulfoxylate in 0.06 part, and a chain transfer agent of t-dodecyl mercaptan in 1 part were added to start a first stage of emulsion polymerization. After the start of the reaction, when the polymerization conversion rate of the charged monomers reached 42 wt% and 60 wt%, the reaction vessel was additionally charged with 1,3-butadiene respectively in 12 parts and 12 parts for a second stage and a third stage of polymerization reaction. After that, when the polymerization conversion rate of the total charged monomers reached 75 wt%, hydroxylamine sulfate in 0.3 part and potassium hydroxide in 0.2 part were added to make the polymerization reaction stop. After stopping the reaction, the content of the reaction vessel was warmed to 70°C and steam distillation was used under reduced pressure to recover the unreacted monomers to obtain a latex of the nitrile copolymer rubber (A1) (solid content: 24 wt%).

Part of the latex was sampled, was coagulated by a large amount of methanol, then was filtered and dried to obtain a nitrile copolymer rubber (A1). The obtained nitrile copolymer rubber (A1) was measured for the ratio of contents of the monomer units forming the same using an FT NMR apparatus made by JEOL (JNM-EX400WB), whereupon the acrylonitrile monomer units were 50 wt% and the 1,3-butadiene units were 50 wt%. Further, the nitrile copolymer rubber (A1) had a Mooney viscosity (polymer Mooney viscosity) of 75.

### Production Example 2 (Production of Latex of Nitrile Copolymer Rubber (A2))

Except for using the monomers charged for the first stage of the emulsion polymerization in Production Example 1, acrylonitrile in 75.7 parts and 1,3-butadiene in 22 parts plus further 2-vinylpyridine in 2.2 parts, the same procedure was performed as in Production Example 1 to obtain a latex of a nitrile copolymer rubber (A2) (solid content: 24 wt%).

The obtained nitrile copolymer rubber (A2) was measured for the ratio of contents of the monomer units forming the same in the same way as in Production Example 1, whereupon the acrylonitrile monomer units were 50 wt%, the 2-vinylpyridine units were 2 wt%, and the 1,3-butadiene units were 48 wt%. Further, the nitrile copolymer rubber (A2) had a Mooney viscosity (polymer Mooney viscosity) of 73.

### Production Example 3 (Production of Latex of Hydrogenated Nitrile Copolymer Rubber (A3))

The latex of the nitrile copolymer rubber (A1) which was obtained at Production Example 1 was hydrogenated at a hydrogen pressure of 3 MPa and a temperature of 50°C for 6 hours, while adding a palladium catalyst (solution of 1 wt% palladium acetate acetone solution and equal weight of ion exchanged water mixed together) to the reactor so that the palladium content became 1000 ppm with respect to the dry rubber weight contained in the latex, so as to thereby obtain a latex of hydrogenated nitrile copolymer rubber (A3).

The obtained hydrogenated nitrile copolymer rubber (A3) was measured for the ratio of contents of the monomer units forming the same in the same way as in Production Example 1, whereupon the acrylonitrile monomer units were 50 wt% and the total of the 1,3-butadiene units and saturated butadiene units was 50 wt%. Further, the hydrogenated nitrile copolymer rubber (A3) had a Mooney viscosity (polymer Mooney viscosity) of 155 and an iodine value of 20.

### Production Example 4 (Production of Latex of Hydrogenated Nitrile Copolymer Rubber (A4))

The latex of the nitrile copolymer rubber (A2) which was obtained at Production Example 2 was hydrogenated at a hydrogen pressure of 3 MPa and a temperature of 50°C for 6 hours, while adding a palladium catalyst (solution of 1 wt% palladium acetate acetone solution and equal weight of ion exchanged water mixed together) to the reactor so that the palladium content became 1000 ppm with respect to the dry rubber weight contained in the latex, so as to thereby obtain a latex of hydrogenated nitrile copolymer rubber (A4).

The obtained hydrogenated nitrile copolymer rubber (A4) was measured for the ratio of contents of the monomer units forming the same in the same way as in Production Example 1, whereupon the acrylonitrile monomer units were 50 wt%, the 2-vinylpyridine units were 2 wt%, and the total of the 1,3-butadiene units and saturated butadiene units was 48 wt%. Further, the hydrogenated nitrile copolymer rubber (A4) had a Mooney viscosity (polymer Mooney viscosity) of 163 and an iodine value of 30.

### Production Example 5 (Production of Latex of Vinyl Chloride Resin)

A pressure resistant reaction vessel was charged with water in 120 parts, sodium laurylsulfate in 0.8 part, and potassium persulfate in 0.06 part, was reduced in pressure and deaerated twice repeatedly, then was charged with vinyl chloride in 100 parts. The result was stirred while warming for emulsion polymerization at 47°C. After the polymerization conversion rate reached 90%, the result was cooled to room temperature and the unreacted monomer was removed. The obtained vinyl chloride resin latex had a concentration of 41 wt%. The vinyl chloride resin had an average particle size of 0.3 µm. The average polymerization degree, according to JIS K6721, was 1,300, and the glass transition temperature was 80°C.

### Production Example 6 (Production of Latex of Acryl Resin)

To a reactor equipped with a thermometer and stirrer, ion exchanged water in 150 parts, sodium octylsulfate in 2 parts, ammonium persulfate (polymerization initiator) in 0.3 part, methyl methacrylate in 80 parts, acrylonitrile in 20 parts, and t-dodecyl mercaptan (molecular weight adjuster) in 0.05 part were added. While stirring, emulsion polymerization was started at a temperature of 80°C. After 5 hours, the reaction was stopped to obtain a latex. The obtained acryl resin latex had a concentration of 39 wt% and a polymerization conversion rate of 98 wt%. The acryl resin had an average particle size of 0.2 µm, a number average molecular weight of 600,000, and a glass transition temperature of 103°C.

### Example 1

A plate-shaped filler (B) constituted by purified bentonite (product name "Bengel", made by Hojun, swelling capacity: 35, TI value when made 5% slurry: 2.5) in 100 parts was added to distilled water in 1995 parts in the presence of sodium polyacrylate in 5 parts and strongly stirred to obtain a plate-shaped filler aqueous dispersion with a solid content concentration of 5%.

Further, a latex of the nitrile copolymer rubber (A1) which was produced at Production Example 1 was stirred in a container while adding the above prepared plate-shaped filler aqueous dispersion so as to cause dispersion. Note that, the plate-shaped filler aqueous dispersion was added to give, with respect to a solid content of the latex of the nitrile copolymer rubber (A1) (nitrile copolymer rubber amount) as 100 parts, the plate-shaped filler (B) in 20 parts and to have a solid content (nitrile copolymer rubber and plate-shaped filler) concentration of 15% so as to obtain the nitrile copolymer latex composition. Further, the obtained nitrile copolymer latex composition was poured, with stirring, into an aqueous solution which contained calcium chloride (coagulant) in an amount of 4 wt% with respect to the amount of nitrile copolymer rubber (A1) in the latex composition, while adjusting the pH by suitably adding 10% dilute sulfuric acid so that the pH of the aqueous solution during coagulation became 2, so as to cause the composition to coagulate and to produce crumbs comprised of a mixture of the nitrile copolymer rubber (A1) and plate-shaped filler (B).

Further, the obtained crumbs were filtered out, rinsed, then dried at 60°C in vacuo to obtain a nitrile copolymer rubber composition. Note that, the purified bentonite (product name "Bengel") was measured for aspect ratio by an atomic force microscope, whereupon the result was found to be 280.

Next, a Bambury mixer was used to add, with respect to the nitrile copolymer rubber (A1) in the nitrile copolymer rubber composition as 100 parts, FEF carbon black (Seast SO, made by Tokai Carbon) in 2 parts and a cross-linking aid constituted by zinc white in 5 parts and stearic acid in 1 part. This was mixed at 50°C. Further, this mixture was transferred to a roll where it was kneaded, with the addition of a cross-linking agent of 325 mesh sulfur in 0.5 part and tetramethyl thiuram disulfide (product name "Noccelar TT", made by Ouchi Shinko Chemical Industrial Co., Ltd.) in 1.5 part and N-cyclohexyl-2-benzothiazolyl sulfenamide (product name "Noccelar CZ", made by Ouchi Shinko Chemical Industrial Co., Ltd., cross-linking accelerator) in 1.5 part, at 50°C to prepare a cross-linkable nitrile copolymer rubber composition.

The rubber cross-linked product obtained by cross-linking the obtained cross-linkable nitrile copolymer rubber composition was evaluated for normal physical properties (tensile strength, elongation, 100% tensile stress, hardness), gasoline permeation coefficient, embrittlement temperature, and sour gasoline resistance. The results are shown in Table 1.

### Example 2

Except for using, as the plate-shaped filler (B), purified bentonite (product name "Bengel Bright 23", made by Hojun, swelling capacity: 27, TI value when made 5% slurry: 2.3), the same procedure was performed as in Example 1 to prepare compositions. The same procedure was performed to evaluate them. Note that, the purified bentonite (product name "Bengel Bright 23") was measured for aspect ratio by an atomic force microscope, whereupon the result was found to be 260. The results are shown in Table 1.

### Example 3

Except for using, as the plate-shaped filler (B), purified bentonite (product name "Bengel HVP", made by Hojun, swelling capacity: 42, TI value when made 5% slurry: 4.8), the same procedure was performed as in Example 1 to prepare compositions. The same procedure was performed to evaluate it. Note that, the purified bentonite (product name "Bengel HVP") was measured for aspect ratio by an atomic force microscope, whereupon the result was found to be 285. The results are shown in Table 1.

### Example 4

Except for using, as the plate-shaped filler (B), purified bentonite (product name "Bengel HV", made by Hojun, swelling capacity: 50, TI value when made 5% slurry: 4.0), the same procedure was performed as in Example 1 to prepare compositions. The same procedure was performed to evaluate it. Note that, the purified bentonite (product name "Bengel HV") was measured for aspect ratio by an atomic force microscope, whereupon the result was found to be 295. The results are shown in Table 1.

### Example 5 (Reference Example)

Except for using, as the plate-shaped filler (B), synthetic mica (product name "DMA-350", made by Topy Industries, swelling capacity: 25, TI value when made 5% slurry: 2.3), the same procedure was performed as in Example 1 to prepare compositions. The same procedure was performed to evaluate it. Note that, the synthetic mica (product name "DMA-350") was measured for aspect ratio by an atomic force microscope, whereupon the result was found to be 1000. The results are shown in Table 1.

### Example 6

Except for using, instead of the latex of the nitrile copolymer rubber (A1), a latex of the nitrile copolymer rubber (A2) which was produced in Production Example 2, the same procedure was performed as in Example 1 to prepare compositions. The same procedure was performed to evaluate it. The results are shown in Table 1.

### Example 7

Except for, when preparing the cross-linkable nitrile copolymer rubber composition, further adding, with respect to the nitrile copolymer rubber (A1) as 100 parts, a latex of the vinyl chloride resin which was obtained in Production Example 5 (vinyl chloride resin: 45 parts) and further adding a plasticizer (C) constituted by di(butoxyethoxyethyl) adipate in 35 parts, the same procedure was performed as in Example 1 to obtain a nitrile copolymer rubber composition. The obtained nitrile copolymer rubber composition was kneaded by a roll at 170°C for 5 minutes, then the same procedure was performed as in Example 1 to prepare a cross-linkable nitrile copolymer rubber composition. The same procedure was performed to evaluate it. Note that, a plasticizer (C) constituted by di(butoxyethoxyethyl)adipate (product name "Adekasizer RS-107", made by Asahi Denka) was made an aqueous dispersion by adding to a 50 wt% aqueous emulsion of di(butoxyethoxyethyl)adipate an emulsifier constituted by potassium oleate in an amount of 2 wt% of the di(butoxyethoxyethyl)adipate and mixing the same under strong stirring. This was added as an aqueous dispersion. The results are shown in Table 1.

### Example 8

Except for, when preparing the cross-linkable nitrile copolymer rubber composition, further adding, with respect to the nitrile copolymer rubber (A1) as 100 parts, a latex of the acryl resin which was obtained in Production Example 6 (acryl resin: 45 parts) and further adding a plasticizer (C) constituted by di(butoxyethoxyethyl)adipate (product name "Adekasizer RS-107", made by Asahi Denka) in 35 parts, the same procedure was performed as in Example 1 to prepare compositions. The same procedure was performed to evaluate it. Note that, the plasticizer (C) constituted by the di(butoxyethoxyethyl)adipate, in the same way as Example 7, was added as an aqueous dispersion. The results are shown in Table 1.

### Example 9

Except for, when preparing the nitrile copolymer rubber composition, further adding, with respect to the nitrile copolymer rubber (A1) as 100 parts, a plasticizer (C) constituted by di(butoxyethoxyethyl)adipate (product name "Adekasizer RS-107", made by Asahi Denka) in 10 parts, the same procedure was performed as in Example 1 to prepare compositions. The same procedure was performed to evaluate it. Note that, the plasticizer (C) constituted by the di(butoxyethoxyethyl) adipate, in the same way as Example 7, was added as an aqueous dispersion. The results are shown in Table 1.

### Comparative Example 1

Except for using, as the plate-shaped filler (B), purified bentonite (product name "Bengel Bright 11", made by Hojun, swelling capacity: 6, TI value when made 5% slurry: 1.3),the same procedure was performed as in Example 1 to prepare compositions. The same procedure was performed to evaluate it. Note that, the purified bentonite (product name "Bengel Bright 11") was measured for aspect ratio by an atomic force microscope, whereupon the result was found to be 35. The results are shown in Table 1.

### Comparative Example 2

Except for using, as the plate-shaped filler (B), purified montmorillonite (product name "Kunipia F", made by Kunimine Industries, swelling capacity: 65, TI value when made 5% slurry: 5.4),the same procedure was performed as in Example 1 to prepare compositions. The same procedure was performed to evaluate it. Note that, the purified bentonite (product name "Kunipia F") was measured for aspect ratio by an atomic force microscope, whereupon the result was found to be 300. The results are shown in Table 1.

### Comparative Example 3

Except for using, as the plate-shaped filler (B), purified bentonite (product name "Bengel 2M", made by Hojun, swelling capacity: 69, TI value when made 5% slurry: 5.5), the same procedure was performed as in Example 1 to prepare compositions. The same procedure was performed to evaluate it. Note that, the purified bentonite (product name "Bengel 2M") was measured for aspect ratio by an atomic force microscope, whereupon the result was found to be 310. The results are shown in Table 1.

### Comparative Example 4

Except for using, as the plate-shaped filler (B), bentonite (product name "Akagi", made by Hojun, swelling capacity: 5, TI value when made 5% slurry: 1.2), the same procedure was performed as in Example 1 to prepare compositions. The same procedure was performed to evaluate it. Note that, the bentonite (product name "Akagi") was measured for aspect ratio by an atomic force microscope, whereupon the result was found to be 30. The results are shown in Table 1.

### Comparative Example 5

Except for using, instead of the latex of the nitrile copolymer rubber (A1), a latex of the nitrile copolymer rubber (A2) which was produced in Production Example 2, the same procedure was performed as in Comparative Example 3 to prepare compositions. The same procedure was performed to evaluate it. The results are shown in Table 1.

### Comparative Example 6

Except for using, as the plate-shaped filler (B), purified bentonite (product name "Bengel A", made by Hojun, swelling capacity: 42, TI value when made 5% slurry: 7.5), the same procedure was performed as in Example 1 to prepare compositions. The same procedure was performed to evaluate it. Note that, the purified bentonite (product name "Bengel A") was measured for aspect ratio by an atomic force microscope, whereupon the result was found to be 290. The results are shown in Table 1.

### Example 10

Except for using, instead of the latex of the nitrile copolymer rubber (A1), a latex of the hydrogenated nitrile copolymer rubber (A3) which was produced in Production Example 3, the same procedure was performed as in Example 1 to prepare compositions. The same procedure was performed to evaluate it. The results are shown in Table 2.

### Example 11

Except for using, instead of the latex of the nitrile copolymer rubber (A1), a latex of the hydrogenated nitrile copolymer rubber (A4) which was produced in Production Example 4, the same procedure was performed as in Example 1 to prepare compositions. The same procedure was performed to evaluate it. The results are shown in Table 2.

### Example 12

The same procedure as in Example 6 was performed to obtain crumbs comprised of a mixture of the nitrile copolymer rubber (A2) and plate-shaped filler (B). The obtained crumbs were filtered out, rinsed, then dried at 60°C in vacuo. Next, a Bambury mixer was used to add to the dried crumbs, with respect to the nitrile copolymer rubber (A2) in the crumbs as 100 parts, a particle-shaped filler (D) constituted by untreated calcium carbonate (product name "Silver W", made by Shiraishi Kogyo, aspect ratio 3.5, average particle size 3 µm, specific surface area 5.5 m²/g) in 20 parts, FEF carbon black (product name "Seast SO", made by Tokai Carbon) in 2 parts, a cross-linking aid constituted by zinc white in 5 parts, and stearic acid in 1 part. This was mixed at 50°C. Further, this mixture was transferred to a roll where it was kneaded, with the addition of a cross-linking agent of 325 mesh sulfur in 0.5 part, tetramethyl thiuram disulfide (product name "Noccelar TT", made by Ouchi Shinko Chemical Industrial Co., Ltd.) in 1.5 part, and N-cyclohexyl-2-benzothiazolyl sulfenamide (product name "Noccelar CZ", made by Ouchi Shinko Chemical Industrial Co., Ltd., cross-linking accelerator) in 1.5 part, at 50°C so as to prepare a cross-linkable nitrile copolymer rubber composition.

Further, the rubber cross-linked product obtained by cross-linking the obtained cross-linkable nitrile copolymer rubber was evaluated for the above-mentioned normal physical properties (tensile strength, elongation, 100% tensile stress, hardness), gasoline permeation coefficient, embrittlement temperature, and sour gasoline resistance and was evaluated for extrudability. The results are shown in Table 3.

### Example 13

Except for using as the particle-shaped filler (D), instead of untreated calcium carbonate (Silver W) in 15 parts, calcium carbonate treated on its surface by a fatty acid (product name "Hakuenka CC", made by Shiraishi Kogyo, aspect ratio 1.0, average particle size 0.05 µm, specific surface area 26 m²/g) in 20 parts, the same procedure was performed as in Example 12 to prepare a cross-linkable nitrile copolymer rubber composition. This was evaluated in the same way as Example 12. The results are shown in Table 3.

### Example 14

Except for using as the particle-shaped filler (D), instead of untreated calcium carbonate (Silver W) in 15 parts, calcium carbonate treated on its surface by rosin acid (product name "Hakuenka O", made by Shiraishi Kogyo, aspect ratio 1.0, average particle size 0.03 µm, specific surface area 51 m²/g) in 20 parts, the same procedure was performed as in Example 12 to prepare a cross-linkable nitrile copolymer rubber composition. This was evaluated in the same way as Example 12. The results are shown in Table 3.

**Table 1**

| | | | Example | | | | | | | | | Comparative Example | | | | | |
|---|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 | 6 |
| Nitrile copolymer rubber latex | | | | | | | | | | | | | | | | | |
| | Acrylonitrile units | (wt%) | 50 | 50 | 50 | 50 | 50 | 50 | 50 | 50 | 50 | 50 | 50 | 50 | 50 | 50 | 50 |
| | 1,3-butadiene units | (wt%) | 50 | 50 | 50 | 50 | 50 | 48 | 50 | 50 | 50 | 50 | 50 | 50 | 50 | 48 | 50 |
| | 2-vinylpyridine units | (wt%) | - | - | - | - | - | 2 | - | - | - | - | - | - | - | 2 | - |

| Plate-shaped filler | | | | | | | | | | | | | | | | | |
|---|---|---|---|---|---|---|---|---|---|---|---|---|---|---|---|---|---|
| | Swelling capacity | (ml/2g) | 35 | 27 | 42 | 50 | 25 | 35 | 35 | 35 | 35 | 6 | 65 | 69 | 5 | 69 | 42 |
| | Aspect ratio | | 280 | 260 | 285 | 295 | 1000 | 280 | 280 | 280 | 280 | 35 | 300 | 310 | 30 | 310 | 290 |
| | TI value of 5% slurry | | 2.5 | 2.3 | 4.8 | 4.0 | 2.3 | 2.5 | 2.5 | 2.5 | 2.5 | 1.3 | 5.4 | 5.5 | 1.2 | 5.5 | 7.5 |

| Formulation of cross-linkable nitrile copolymer rubber composition | | | | | | | | | | | | | | | | | |
|---|---|---|---|---|---|---|---|---|---|---|---|---|---|---|---|---|---|
| | Nitrile copolymer rubber | (parts) | 100 | 100 | 100 | 100 | 100 | 100 | 100 | 100 | 100 | 100 | 100 | 100 | 100 | 100 | 100 |
| | Vinyl chloride resin | (parts) | - | - | - | - | - | - | 45 | - | - | - | - | - | - | - | - |
| | Acryl resin | (parts) | - | - | - | - | - | - | - | 45 | - | - | - | - | - | - | - |
| | Piste-shaped filler | (parts) | 20 | 20 | 20 | 20 | 20 | 20 | 20 | 20 | 20 | 20 | 20 | 20 | 20 | 20 | 20 |
| | Plasticizer | (parts) | - | - | - | - | - | - | 35 | 35 | 10 | - | - | - | - | - | - |
| Tensile strength | | (MPa) | 23.4 | 22.4 | 23.6 | 23.8 | 16.6 | 23.6 | 18.1 | 17.2 | 22.5 | 13.8 | 25.2 | 24.8 | 13.4 | 25.2 | 24.8 |
| Elongation | | (%) | 470 | 480 | 460 | 460 | 540 | 450 | 340 | 370 | 480 | 530 | 480 | 500 | 530 | 440 | 490 |
| 100% tensile stress | | (MPa) | 7.6 | 7.4 | 7.7 | 7.9 | 3.2 | 8.7 | 7.1 | 6.1 | 6.8 | 2.9 | 9.8 | 9.2 | 2.8 | 10.5 | 8.4 |
| Hardness | | (Duro-A) | 81 | 80 | 81 | 82 | 64 | 83 | 69 | 68 | 78 | 62 | 83 | 82 | 61 | 84 | 82 |
| Gasoline permeation coefficient | | (g·mm/m²·day) | 320 | 350 | 267 | 270 | 370 | 220 | 306 | 311 | 350 | 500 | 250 | 255 | 550 | 215 | 280 |
| Embrittlement temperature | | (°C) | -11 | -13 | -14 | -10 | -13 | -12 | -11 | -12 | -16 | -15 | -3 | -2 | -12 | +2 | -6 |
| Sour gasoline resistance (presence of crocks) | | | None | None | None | None | None | None | None | None | None | None | None | None | None | None | None |

**Table 2**

| | | | Example | |
|---|---|---|---|---|
| | | | 10 | 11 |
| Hydrogenated nitrile copolymer rubber latex | | | | |
| | Acrylonitrile units | (wt%) | 50 | 50 |
| | 1,3-butadiene units and saturated butadiene | (wt%) | 50 | 48 |
| | 2-vinylpyridine units | (wt%) | - | 2 |
| | Iodine value | | 20 | 30 |

| Plate-shaped filler | | | | |
|---|---|---|---|---|
| | Swelling capacity | (ml/2g) | 35 | 35 |
| | Aspect ratio | | 280 | 280 |
| | TI value of 5% slurry | | 2.5 | 2.5 |

| Formulation of cross-linkable hydrogenated nitrile copolymer rubber composition | | | | |
|---|---|---|---|---|
| | Hydrogenated nitrile copolymer rubber | (parts) | 100 | 100 |
| | Vinyl chloride resin | (parts) | - | - |
| | Acryl resin | (parts) | - | - |
| | Plate-shaped filler | (parts) | 20 | 20 |
| | Plasticizer | (parts) | - | - |
| Tensile strength | | (MPa) | 28.7 | 29.3 |
| Elongation | | (%) | 580 | 540 |
| 100% tensile stress | | (MPa) | 8.2 | 8.1 |
| Hardness | | (Duro-A) | 84 | 87 |
| Gasoline permeation coefficient | | (g·mm/m²·day) | 325 | 298 |
| Embrittlement temperature | | (°C) | -20 | -16 |
| Sour gasoline resistance (presence of cracks) | | | None | None |

**Table 3**

| | | | Example | | |
|---|---|---|---|---|---|
| | | | 12 | 13 | 14 |
| Nitrile copolymer rubber | | | | | |
| | Acrylonitrile units | (wt%) | 50 | 50 | 50 |
| | 1,3-butadiene units | (wt%) | 48 | 48 | 48 |
| | 2-vinylpyridine units | (wt%) | 2 | 2 | 2 |
| Plate-shaped filler | | | | | |
| | Swelling capacity | (ml/2g) | 35 | 35 | 35 |
| | Aspect ratio | | 280 | 280 | 280 |
| | TI value of 5% slurry | | 2.5 | 2.5 | 2.5 |
| Particle-shaped filler | | | | | |
| | Aspect ratio | | 3.5 | 1.0 | 1.0 |
| | Specific surface area | (m²/g) | 5.5 | 28 | 51 |
| Formulation of cross-linkable nitrile copolymer rubber composition | | | | | |
| | Nitrile copolymer rubber | (parts) | 100 | 100 | 100 |
| | Plate-shaped filler | (parts) | 20 | 20 | 20 |
| | Particle-shaped filler | (parts) | 20 | 20 | 20 |
| Tensile strength | | (MPa) | 21.3 | 21.9 | 23.8 |
| Elongation | | (%) | 450 | 450 | 470 |
| 100% tensile stress | | (MPa) | 8.1 | 7.8 | 7.7 |
| Hardness | | (Duro-A) | 85 | 84 | 84 |
| Gasoline permeation coefficient | | (g·mm/m²·day) | 228 | 223 | 203 |
| Embrittlement temperature | | (°C) | -11 | -10 | -10 |
| Sour gasoline resistance (presence of cracks) | | | None | None | None |
| Extrudability (surface properties) | | | Good | Good | Good |

From Tables 1 and 2, by including in a nitrile copolymer latex composition (hydrogenated nitrile copolymer latex composition) a plate-shaped filler with a swelling capacity with respect to water of 15 to 55 (ml/2g) and a TI value when made a 5% slurry of 1 to 6, coagulating this, and adding a cross-linking agent for cross-linking, the obtained rubber cross-linked product can be made one with good normal physical properties, a small gasoline permeation coefficient, a low embrittlement temperature, and an excellent sour gasoline resistance (Examples 1 to 11).

Further, from Table 3, when further mixing in the particle-shaped filler (D), it was possible to obtain a product with good normal physical properties, a small gasoline permeation coefficient, a low embrittlement temperature, and an excellent sour gasoline resistance while obtaining a good extrudability (Examples 12 to 14).

On the other hand, when using a plate-shaped filler with a swelling capacity with respect to water of less than 15 (ml/2g), the result was a degraded gasoline permeability (Comparative Examples 1 and 4).

Further, when using a plate-shaped filler with a swelling capacity with respect to water of over 55 (ml/2g), the result was a higher embrittlement temperature and inferior cold resistance (Comparative Examples 2, 3, and 5).

Further, when using a plate-shaped filler even with a swelling capacity with respect to water of 15 to 55 (ml/2g), if the TI value in the case made a 5% slurry is over 6, the result was a higher embrittlement temperature and inferior cold resistance (Comparative Example 6).

## Claims

1. A nitrile copolymer latex composition for fuel hose, the nitrile copolymer latex composition containing a latex of a nitrile copolymer rubber (A) having α,β-ethylenically unsaturated nitrile monomer units in 20 to 70 wt%, and a plate-shaped filler (B), wherein
said plate-shaped filler (B) has a swelling capacity with respect to water of 27 to 55 (ml/2g), a thixotropic index (TI value) when mixed with an aqueous medium in a 5 wt% concentration to obtain a slurry of 2.3 to 6, and an aspect ratio of 260 to 2,000, and
a ratio of said plate-shaped filler (B) to said nitrile copolymer rubber (A), as 100 parts by weight, is 1 to 200 parts by weight.

2. The nitrile copolymer latex composition for fuel hose as set forth in claim 1, wherein said nitrile copolymer rubber (A) further has cationic monomer units and/or monomer units able to form cations, and the ratio of content of the cationic monomer units and/or monomer units able to form cations in said nitrile copolymer rubber (A) is 0.1 to 20 wt%.

3. The nitrile copolymer latex composition for fuel hose as set forth in claim 1 or 2, wherein said nitrile copolymer rubber (A) further has conjugated diene monomer units, and a ratio of content of said conjugated diene monomer units in said nitrile copolymer rubber (A) is 10 to 79.9 wt%.

4. The nitrile copolymer latex composition for fuel hose as set forth in any one of claims 1 to 3, wherein said plate-shaped filler (B) is a smectites.

5. The nitrile copolymer latex composition for fuel hose as set forth in any one of claims 1 to 4, wherein the composition further contains a plasticizer (C).

6. The nitrile copolymer latex composition for fuel hose as set forth in any one of claims 3 to 5, wherein said nitrile copolymer rubber (A) is a hydrogenated nitrile copolymer rubber where at least part of the carbon-carbon unsaturated bond parts is hydrogenated.

7. The nitrile copolymer latex composition for fuel hose as set forth in any one of claims 1 to 6, wherein the composition further contains, with respect to said nitrile copolymer rubber (A) as 100 parts by weight, 10 to 150 parts by weight of a vinyl chloride resin and/or acryl resin.

8. A nitrile copolymer rubber composition for fuel hose obtained by coagulation of the nitrile copolymer latex composition as set forth in any one of claims 1 to 7.

9. The nitrile copolymer rubber composition for fuel hose as set forth in claim 8, wherein the composition further contains, with respect to the nitrile copolymer rubber (A) in said nitrile copolymer rubber composition as 100 parts by weight, 10 to 150 parts by weight of a vinyl chloride resin and/or acryl resin.

10. A cross-linkable nitrile copolymer rubber composition for fuel hose comprised of the nitrile copolymer rubber composition as set forth in claim 8 or claim 9 to which a cross-linking agent is added.

11. A rubber cross-linked product for fuel hose obtained by cross-linking the cross-linkable nitrile copolymer rubber composition as set forth in claim 10.

12. The rubber cross-linked product for fuel hose as set forth in claim 11, which is a fuel hose.

## Patentansprüche

1. Nitrilcopolymer-Latexzusammensetzung für einen Kraftstoffschlauch, wobei die Nitrilcopolymer-Latexzusammensetzung einen Latex eines Nitrilcopolymerkautschuks (A) mit α,β-ethylenisch ungesättigten Nitrilmonomereinheiten bei 20 bis 70 Gew.-% und einen plattenförmigen Füllstoff (B) enthält, wobei
der plattenförmige Füllstoff (B) ein Quellvermögen, bezogen auf Wasser, von 27 bis 55 (ml/2 g), einen thixotropen Index (TI-Wert), wenn mit einem wässrigen Medium in einer 5 Gew.-%-Konzentration unter Erhalt einer Aufschlämmung gemischt wird, von 2,3 bis 6 und ein Seitenverhältnis von 260 bis 2000 hat und
ein Verhältnis des plattenförmigen Füllstoffs (B) zu dem Nitrilcopolymerkautschuk (A), als 100 Gewichtsteile, 1 bis 200 Gewichtsteile beträgt.

2. Nitrilcopolymer-Latexzusammensetzung für einen Kraftstoffschlauch gemäß Anspruch 1, wobei der Nitrilcopolymerkautschuk (A) weiterhin kationische Monomereinheiten und/oder Monomereinheiten, die Kationen bilden können, besitzt und das Verhältnis des Gehalts der kationischen Monomereinheiten und/oder der Monomereinheiten, die Kationen bilden können, in dem Nitrilcopolymerkautschuk (A) 0,1 bis 20 Gew.-% beträgt.

3. Nitrilcopolymer-Latexzusammensetzung für einen Kraftstoffschlauch gemäß Anspruch 1 oder 2, wobei der Nitrilcopolymerkautschuk (A) weiterhin konjugierte Dienmonomereinheiten besitzt und ein Verhältnis des Gehalts der konjugierten Dienmonomereinheiten in dem Nitrilcopolymerkautschuk (A) 10 bis 79,9 Gew.-% beträgt.

4. Nitrilcopolymer-Latexzusammensetzung für einen Kraftstoffschlauch gemäß einem der Ansprüche 1 bis 3, wobei der plattenförmige Füllstoff (B) ein Smektit ist.

5. Nitrilcopolymer-Latexzusammensetzung für einen Kraftstoffschlauch gemäß einem der Ansprüche 1 bis 4, wobei die Zusammensetzung weiterhin einen Weichmacher (C) enthält.

6. Nitrilcopolymer-Latexzusammensetzung für einen Kraftstoffschlauch gemäß einem der Ansprüche 3 bis 5, wobei der Nitrilcopolymerkautschuk (A) ein hydrierter Nitrilcopolymerkautschuk ist, wobei wenigstens ein Teil der ungesättigten Kohlenstoff-Kohlenstoff-Bindungsteile hydriert ist.

7. Nitrilcopolymer-Latexzusammensetzung für einen Kraftstoffschlauch gemäß einem der Ansprüche 1 bis 6, wobei die Zusammensetzung weiterhin, bezogen auf den Nitrilcopolymerkautschuk (A) als 100 Gewichtsteile, 10 bis 150 Gewichtsteile eines Vinylchloridharzes und/oder eines Acrylharzes enthält.

8. Nitrilcopolymerkautschukzusammensetzung für einen Kraftstoffschlauch, welche durch Koagulation der Nitrilcopolymer-Latexzusammensetzung gemäß einem der Ansprüche 1 bis 7 erhalten wird.

9. Nitrilcopolymerkautschukzusammensetzung für einen Kraftstoffschlauch gemäß Anspruch 8, wobei die Zusammensetzung weiterhin, bezogen auf den Nitrilcopolymerkautschuk (A) in der Nitrilcopolymerkautschukzusammensetzung als 100 Gewichtsteile, 10 bis 150 Gewichtsteile eines Vinylchloridharzes und/oder eines Acrylharzes enthält.

10. Vernetzbare Nitrilcopolymerkautschukzusammensetzung für einen Kraftstoffschlauch, welche aus der Nitrilcopolymerkautschukzusammensetzung gemäß Anspruch 8 oder Anspruch 9, zu der ein Vernetzungsmittel gegeben ist, besteht.

11. Vernetztes Kautschukprodukt für einen Kraftstoffschlauch, das durch Vernetzen der vernetzbaren Nitrilcopolymerkautschukzusammensetzung gemäß Anspruch 10 erhalten wird.

12. Vernetztes Kautschukprodukt für einen Kraftstoffschlauch gemäß Anspruch 10, welches ein Kraftstoffschlauch ist.

## Revendications

1. Composition de latex de copolymère de nitrile pour tuyau pour combustible, la composition de latex de copolymère de nitrile contenant un latex d'un caoutchouc de copolymère de nitrile (A) ayant des motifs monomères de nitrile à insaturation α,β-éthylènique à 20 à 60 % en poids, et une charge en forme de plaque (B), dans laquelle
ladite charge en forme de plaque (B) présente une capacité de gonflement par rapport à l'eau de 27 à 55 (ml/2g), un indice thixotropique (valeur TI) quand elle est mélangée avec un milieu aqueux à une concentration de 5 % poids pour obtenir une suspension de 2,3 à 6, et un rapport d'aspect de 260 à 2000, et
un rapport entre ladite charge en forme de plaque (B) et ledit caoutchouc de copolymère de nitrile (A), pour 100 parties en poids, est de 1 à 200 parties en poids.

2. Composition de latex de copolymère de nitrile pour tuyau pour combustible selon la revendication 1, dans laquelle ledit caoutchouc de copolymère de nitrile (A) contient en outre des motifs monomères cationiques et/ou des motifs monomères capables de former des cations, et le rapport de teneur des motifs monomères cationiques et/ou des motifs monomères capables de former des cations dans ledit caoutchouc de copolymère de nitrile (A) est de 0,1 à 20 % en poids.

3. Composition de latex de copolymère de nitrile pour tuyau pour combustible selon la revendication 1 ou 2, dans laquelle ledit caoutchouc de copolymère de nitrile (A) contient en outre des motifs monomères de diène conjugué, et un rapport de teneur desdits motifs monomères de diène conjugué dans ledit caoutchouc de copolymère de nitrile (A) est de 10 à 79,9 % en poids.

4. Composition de latex de copolymère de nitrile pour tuyau pour combustible selon l'une quelconque des revendications 1 à 3, dans laquelle ladite charge en forme de plaque (B) est une smectite.

5. Composition de latex de copolymère de nitrile pour tuyau pour combustible selon l'une quelconque des revendications 1 à 4, dans laquelle la composition contient en outre un plastifiant (C).

6. Composition de latex de copolymère de nitrile pour tuyau pour combustible selon l'une quelconque des revendications 3 à 5, dans laquelle ledit caoutchouc de copolymère de nitrile (A) est un caoutchouc de copolymère de nitrile hydrogéné où au moins une partie des parties de liaison insaturée carbone-carbone est hydrogénée.

7. Composition de latex de copolymère de nitrile pour tuyau pour combustible selon l'une quelconque des revendications 1 à 6, dans laquelle la composition contient en outre, par rapport audit caoutchouc de copolymère de nitrile (A) pour 100 parties en poids, 10 à 150 parties en poids d'une résine de chlorure de vinyle et/ou d'une résine acrylique.

8. Composition de caoutchouc de copolymère de nitrile pour tuyau pour combustible obtenue par la coagulation de la composition de latex de copolymère de nitrile selon l'une quelconque des revendications 1 à 7.

9. Composition de caoutchouc de copolymère de nitrile pour tuyau pour combustible selon la revendication 8, dans laquelle la composition contient en outre, par rapport au caoutchouc de copolymère de nitrile (A) dans ladite composition de caoutchouc de copolymère de nitrile pour 100 parties en poids, 10 à 150 parties en poids d'une résine de chlorure de vinyle et/ou d'une résine acrylique.

10. Composition de caoutchouc de copolymère de nitrile réticulable pour tuyau pour combustible composée de la composition de caoutchouc de copolymère de nitrile selon la revendication 8 ou la revendication 9 à laquelle un agent de réticulation est ajouté.

11. Produit réticulé de caoutchouc pour tuyau pour combustible obtenu par la réticulation de la composition de caoutchouc de copolymère de nitrile réticulable selon la revendication 10.

12. Produit réticulé de caoutchouc pour tuyau pour combustible selon la revendication 11, qui est un tuyau pour combustible.
